# EUROPEAN PATENT APPLICATION

(11) **EP 4 701 176 A1**
(43) Date of publication of application: **25.02.2026**
(21) Application number: 25195047.3
(22) Date of filing: 11.08.2025
(51) Int. Cl.: H04N 1/00, H04N 1/387

(54) **IMAGE PROCESSING DEVICE, IMAGE FORMING APPARATUS, IMAGE PROCESSING METHOD, AND CARRIER MEANS**

(30) Priority: 22.08.2024 JP 2024140943
(71) Applicant: Ricoh Company, Ltd., Tokyo 143-8555 (JP)
(72) Inventor: YOSHIDA, Atsushi, Kanagawa, 220-0011 (JP)
(74) Representative: SSM Sandmair

(57) **Abstract**

An image processing device (120) includes a processor (208) including an edge amount calculation unit (310) that calculates an edge amount (S101) in a shadow region (402) in image data; an edge determination unit (320) that determines whether the target pixel corresponds to an edge; an edge continuity determination unit (330) that determines whether the edge is a part of a continuous edge; an edge continuity counter (340) that counts an edge continuity number for the target pixel (S104); and a boundary position detection unit (350). The boundary position detection unit (350) counts the edge continuity number for a previous target pixel and determines whether the edge continuity number for the previous target pixel is greater than a preset number (S 105); and detects a boundary position, based on the edge amount of each of the target pixels forming the continuous edge up to the previous target pixel (S106).

## Description

### BACKGROUND

### Technical Field

The present disclosure relates to an image processing device, an image forming apparatus, an image processing method, and a carrier means.

### Related Art

An electronic skew correction technique has been proposed that corrects document skew and registration misalignment in a main scanning direction and a sub-scanning direction through image processing, based on a skew angle detected from an image read by an automatic document feeder and a scanner in an image forming apparatus having a function of copying. In the electronic skew correction technique, the position of a boundary between a background member and a document is accurately detected.

Japanese Unexamined Patent Application Publication No. 2018-098723 discloses a configuration that determines whether a luminance difference between a target pixel and a pixel separated from the target pixel by a first distance exceeds a first threshold value. The configuration further determines whether a luminance difference between a maximum luminance and a minimum luminance within a second distance greater than the first distance is lower than a second threshold value. When both conditions are satisfied, the position of the target pixel is determined to be at a boundary between a background member and a document.

However, this technique may have lower accuracy in detecting the position of the boundary between the object to be detected and the background member when the width of the shadow of the object changes depending on the thickness of the document serving as the object or the irradiation angle of the illumination.

### SUMMARY

In view of the above, the present disclosure described herein provides an image processing device (120) including a processor (208) that controls a scanner to capture image data of a detection object overlapping a background member (92); and sequentially selects a target pixel one by one from multiple pixels of the image data. The processor (208) includes an edge amount calculation unit (310) that calculates an edge amount for the target pixel selected (S101), the edge amount indicating a change in pixel value between the target pixel selected and peripheral pixels adjacent to and surrounding the target pixel selected, in a shadow region (402) in the image data, between: an object region (401) corresponding to the detection object; and a background region (400) corresponding to the background member (92); an edge determination unit (320) that determines whether the target pixel selected corresponds to an edge of the detection object, based on the edge amount calculated (S102) calculated by the edge amount calculation unit (310); an edge continuity determination unit (330) that determines whether the edge is a part of a continuous edge, based on the edge amount calculated for the target pixel selected (S 103), in response to a determination that the target pixel corresponds to the edge (YES in S102); an edge continuity counter (340) that counts an edge continuity number for the target pixel selected, the edge continuity number for the target pixel selected representing a number of target pixels, each corresponding to the edge of the part of the continuous (S104); and a boundary position detection unit (350). The boundary position detection unit (350) counts the edge continuity number for a previous target pixel selected immediately before the target pixel selected and determines whether the edge continuity number for the previous target pixel is greater than a preset number (S105) in response to a determination that the target pixel selected does not correspond to the edge (NO in S102); and detects a boundary position between the detection object and the background member, based on the edge amount of each of the target pixels forming the continuous edge up to the previous target pixel (S 106), in response to a determination that the edge continuity number for the previous target pixel is greater than the preset number (YES in S105).

According to one aspect of the present disclosure, the boundary position can be accurately detected irrespective of a change in the width of the shadow of the object to be detected.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic cross-sectional view of an image forming apparatus;
FIG. 2 is a schematic cross-sectional view illustrating a configuration of a scanner included in the image forming apparatus of FIG. 1;
FIG. 3 is a schematic cross-sectional view illustrating a configuration of an automatic document feeder (ADF) included in the image forming apparatus of FIG. 1;
FIG. 4 is a diagram illustrating a configuration of an area in the vicinity of a reading position for a document;
FIG. 5 is a block diagram illustrating a hardware configuration of the image forming apparatus in FIG. 1;
FIG. 6 is a block diagram of a functional configuration of an image processor;
FIG. 7 is a diagram illustrating an example of image data.
FIG. 8 is a diagram illustrating an example of a detected boundary position;
FIG. 9 is a diagram illustrating the relationship between pixel values, edge amounts, and a boundary position of image data;
FIGS. 10A, 10B, 10C, and 10D are diagrams representing examples of weight coefficients of a derivative filter;
FIG. 11 is a flowchart presenting boundary detection processing;
FIG. 12 is a flowchart of edge analysis processing involved in the boundary detection processing in FIG. 11;
FIG. 13 is a diagram illustrating an example of the boundary detection processing in FIG. 11;
FIG. 14 is a diagram illustrating an example of the boundary detection processing in FIG. 11;
FIG. 15 is a block diagram illustrating a functional configuration of an image processor;
FIG. 16 is a flowchart of the edge analysis processing performed by the image processor in FIG. 15;
FIG. 17 is a block diagram of a functional configuration of an edge continuity determination unit;
FIG. 18 is a flowchart of edge analysis processing partly performed by the edge continuity determination unit in FIG. 17;
FIG. 19 is a diagram illustrating an example of boundary detection processing partly performed by the edge continuity determination unit in FIG. 17;
FIG. 20 is a block diagram of a functional configuration of an edge continuity determination unit;
FIG. 21 is a flowchart of the edge analysis processing partly performed by the edge continuity determination unit in FIG. 20;
FIG. 22 is a diagram illustrating an example of boundary detection processing partly performed by the edge continuity determination unit in FIG. 20;
FIG. 23 is a diagram illustrating a configuration of an inspection apparatus; and
FIGS. 24A and 24B are diagrams each illustrating inspection processing performed by the inspection apparatus in FIG. 23.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

In the following description, embodiments of an image processing device, an image forming apparatus, an image processing method, and a carrier means (non-transitory computer-readable medium) are described in detail with reference to the accompanying drawings.

### First Embodiment

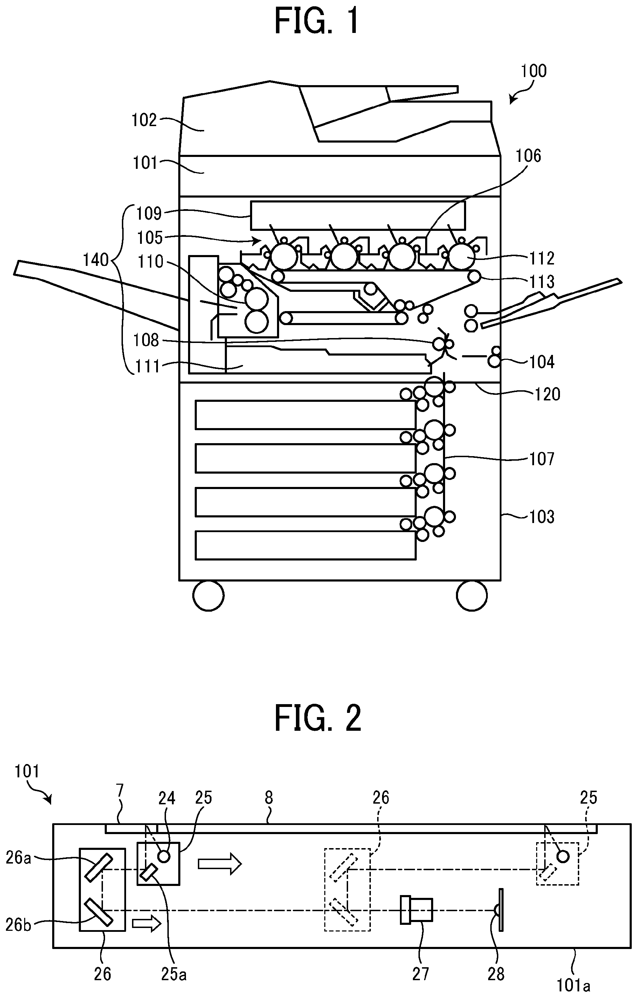

FIG. 1 is a schematic cross-sectional view of an image forming apparatus 100 according to the first embodiment of the present disclosure. The image forming apparatus 100 is a multifunction peripheral having at least two of copying, printing, scanning, and facsimile functions.

As illustrated in FIG. 1, the image forming apparatus 100 includes a sheet feeder 103, a housing 104, a scanner 101, and an automatic document feeder (ADF) 102.

The image forming apparatus 100 includes a plotter 140 serving as an image former inside the housing 104. The plotter 140 includes a tandem image forming unit 105, a registration roller pair 108 that supplies the image forming unit 105 with a recording medium fed by the sheet feeder 103 through a conveyance passage 107, an optical writing device 109, a fixing device 110, and a duplex tray 111.

In the image forming unit 105, four drum-shaped photoconductor drums 112 are arranged side by side to form toner images of yellow (Y), magenta (M), cyan (C), and black (K), respectively. Note that the black toner is an infrared absorbing visible toner. Around each photoconductor drum 112, image forming elements such as a charger, a developing device 106, a transferring device, a cleaner, and an electric charge removing device are disposed.

An intermediate transfer belt 113, entrained around a drive roller and a driven roller, is disposed while being sandwiched between the four photoconductor drums 112 and the respective transfer devices.

In the tandem image forming apparatus 100 configured as described above, the scanner 101 reads a document image, which is an image of a document (i.e., an object to be read) fed by the ADF 102, for example. The optical writing device 109 optically writes latent images on the photoconductor drums 112 for each color of Y, M, C, and K according to data of the image. The developing devices 106 develop the latent images with yellow, magenta, cyan, and black toners into toner images to be primarily transferred onto the intermediate transfer belt 113 in the order of yellow, magenta, cyan, and black, for example. In the image forming apparatus 100, the full-color image is transferred onto the recording sheet (secondary transfer) and fixed on the recording sheet, which is fed by the sheet feeder 103, by the fixing device 110. Then, the recording sheet on which the image is fixed is ejected.

The following describes the scanner 101.

FIG. 2 is a schematic cross-sectional view illustrating the configuration of the scanner 101. As illustrated in FIG. 2, the scanner 101 is an image reading device including a first carriage 25, a second carriage 26, an imaging lens 27, and an imager 28, and these components are disposed inside a body frame 101a of the scanner 101.

Inside the body frame 101a of the scanner 101, a first rail and a second rail extend in a sub-scanning direction (or a horizontal direction in FIG. 2). The first rail includes two rails arranged at a predetermined interval in a main scanning direction, which is orthogonal to the sub-scanning direction. The main scanning direction is orthogonal to the drawing sheet of FIG. 2. The second rail has the same configuration as the first rail.

The first carriage 25 is slidably mounted on the first rail, and reciprocates in the sub-scanning direction via a first carriage drive wire controlled by a drive motor. The first carriage 25 is reciprocable between a position indicated by the solid line and a position indicated by the broken line in FIG. 2. The first carriage 25 includes a light source 24 and a first mirror 25a.

The second carriage 26 is slidably mounted on the second rail, and reciprocates in the sub-scanning direction via a second carriage drive wire controlled by a drive motor. The second carriage 26 is reciprocable between a position indicated by the solid line and a position indicated by the broken line in FIG. 2. The second carriage 26 includes a second mirror member 26a and a third mirror member 26b.

The first carriage 25 and the second carriage 26 move in the sub-scanning direction at a speed ratio of 2 to 1. With such a moving speed relationship, the optical path length from the document surface of the document placed on a contact glass 8 to the imaging lens 27 remains constant irrespective of a movement of the first carriage 25 and a movement of the second carriage 26.

The imaging lens 27 captures and focuses light reflected from the document through the mirrors, forming an image of the reflected light on the imager 28. The imager 28 includes an image sensor such as a charge-coupled device (CCD) and photoelectrically converts the reflected light image of the document, formed through the imaging lens 27, into an analog image signal as the scanned image.

The following describes the ADF 102 placed on the scanner 101.

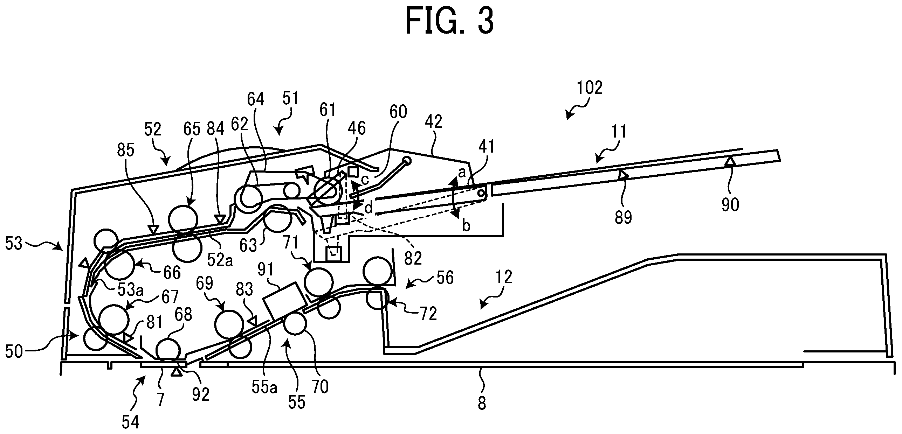

FIG. 3 is a schematic cross-sectional view illustrating a configuration of an ADF 102. As illustrated in FIG. 3, the ADF 102 includes a document tray 11 on which a document is placed. The document tray 11 includes a movable document table 41 that rotates about a proximal end thereof in directions a and b in FIG. 2, and a side guide plate pair 42 that positions the documents in a left-right direction with respect to a document-feeding direction of the documents. The movable document table 41 is rotated to adjust the front edges of the documents in the document-feeding direction to an appropriate height position.

Further, the document tray 11 is provided with document length detection sensors 89 and 90. The document length detection sensors 89 and 90 are configured to detect whether the documents are oriented vertically or horizontally, and are disposed to be spaced apart from each other in the document-feeding direction. The document length detection sensors 89 and 90 may be reflective sensors that perform non-contact detection using optical means, or may be contact actuator-type sensors.

The side guide plate pair 42 is slidable in the left-right direction with respect to the document-feeding direction and is configured to support documents of different sizes placed on the document tray 11.

A set filler 46, which is rotated by the placement of the document, is disposed at an end portion of the side guide plate pair 42 that is fixed in position. Further, a document set sensor 82 is placed at a lowest position on a movement trajectory of a distal end portion of the set filler 46. The document set sensor 82 detects placement of a document on the document tray 11. That is, the document set sensor 82 detects the presence or absence of a document set in the ADF 102, based on whether the set filler 46 has rotated away from the document set sensor 82.

The ADF 102 includes a conveyance unit 50 including a sheet separator and feeder 51, a sheet puller 52, a turner 53, a first reader conveyor 54, a second reader conveyor 55, and an ejector 56. Each of conveyance rollers of the conveyance unit 50 is rotationally driven by one or more conveyance motors.

The sheet separator and feeder 51 includes a pickup roller 61 disposed in the vicinity of a sheet feeding port 60 for feeding a document. The sheet separator and feeder 51 further includes a sheet feeding belt 62 and a reverse roller 63, which are disposed to face each other with a conveyance path interposed therebetween.

The pickup roller 61 is supported by a support arm member 64 that is attached to the sheet feeding belt 62, and is moved up and down via a cam mechanism in directions c and d in FIG. 3, between a contact position where the pickup roller 61 contacts a document bundle and a separation position where the pickup roller 61 is separated from the document bundle. At the contact position, the pickup roller 61 picks up one or more documents, ideally a single document, from among the documents stacked on the document tray 11.

The sheet feeding belt 62 rotates in the document-feeding direction, and the reverse roller 63 rotates in a direction opposite to the document-feeding direction. The reverse roller 63 rotates in a direction opposite to the sheet feeding belt 62 when documents are fed with overlapping. When the reverse roller 63 is in contact with the sheet feeding belt 62 or when only one document is conveyed, the reverse roller 63 is rotated together with the sheet feeding belt 62 by the action of a torque limiter. Thus, a double feed of documents is prevented.

The sheet puller 52 includes a pull-out roller pair 65 disposed so as to sandwich a conveyance path 52a. The sheet puller 52 performs primary abutting alignment (so-called skew correction) on the fed document, based on the drive timing of the pull-out roller pair 65 and the pickup roller 61, and pulls out and conveys the aligned document.

The turner 53 includes an intermediate roller pair 66 and a reading entrance roller pair 67, which are disposed so as to sandwich a conveyance path 53a curved from top to bottom. The turner 53 turns the document, which has been pulled out and conveyed by the intermediate roller pair 66, by conveying the document along a curved conveyance path. The document is then conveyed to the vicinity of the slit glass 7, which is a reading position (imaging position), with the front surface of the document facing downward, by the reading entrance roller pair 67.

In this case, the conveyance speed of the document from the sheet puller 52 to the turner 53 is set higher than the conveyance speed in the first reader conveyor 54. This reduces the time for the document to be conveyed to the first reader conveyor 54.

The first reader conveyor 54 includes a first reading roller 68 that faces the slit glass 7, and a first reading exit roller pair 69, which is disposed in a conveyance path 55a downstream of the reading position. The first reader conveyor 54 conveys the document, which has been conveyed to the vicinity of the slit glass 7, while bringing its front surface into contact with the slit glass 7 by the first reading roller 68. At this time, the document is read by the scanner 101 through the slit glass 7. At this time, the first carriage 25 and the second carriage 26 of the scanner 101 are positioned at the home position. The first reader conveyor 54 further conveys the document by the first reading exit roller pair 69 after the reading is completed.

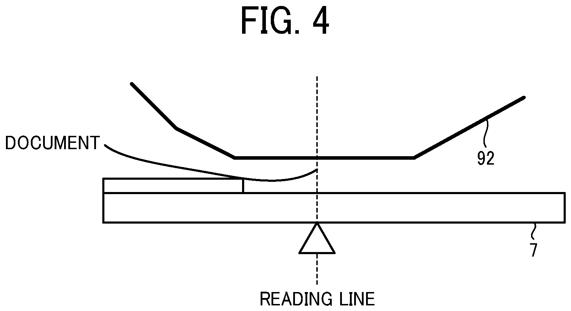

FIG. 4 is a diagram illustrating a configuration of an area in the vicinity of a reading position for a document. In FIG. 4, the document is conveyed from left to right.

As illustrated in FIG. 4, the ADF 102 includes a background member 92 that serves as an imaging background and faces the slit glass 7. The background member 92 is, for example, white and is used for shading correction. The document is conveyed between the slit glass 7 and the background member 92. The scanner 101 reads an image at the position of the reading line illustrated in FIG. 4.

The second reader conveyor 55 includes a second reader 91 that reads the back surface of the document, a second reading roller 70 that faces the second reader 91 across the conveyance path 55a, and a second reading exit roller pair 71 disposed downstream of the second reader 91 in a conveyance direction from the imaging position (the reading position) to the ejector.

In the second reader conveyor 55, the back surface of the document, after the front surface has been read, is read by the second reader 91. The document, after its back surface has been read, is conveyed toward a sheet ejection port by the second reading exit roller pair 71. The second reading roller 70 prevents the document from floating at the second reader 91, and also functions as a reference white portion for acquiring shading data at the second reader 91. When double-sided reading is not performed, the document passes through the second reader 91 without stopping.

The ejector 56 includes a sheet ejection roller pair 72, which is placed in the vicinity of the sheet ejection port. The ejector 56 ejects the document, which has been conveyed by the second reading exit roller pair 71, onto a sheet ejection tray 12.

In the ADF 102, various sensors, such as an abutment sensor 84, a registration sensor 81, and a sheet ejection sensor 83 are placed along the conveyance path. These sensors are used to control document conveyance, including conveyance distance and conveyance speed.

Further, a document width sensor 85 is placed between the pull-out roller pair 65 and the intermediate roller pair 66. The length of the document in the conveyance direction is detected based on motor pulses, by detecting the leading end and the trailing end of the document using the abutment sensor 84 and the registration sensor 81.

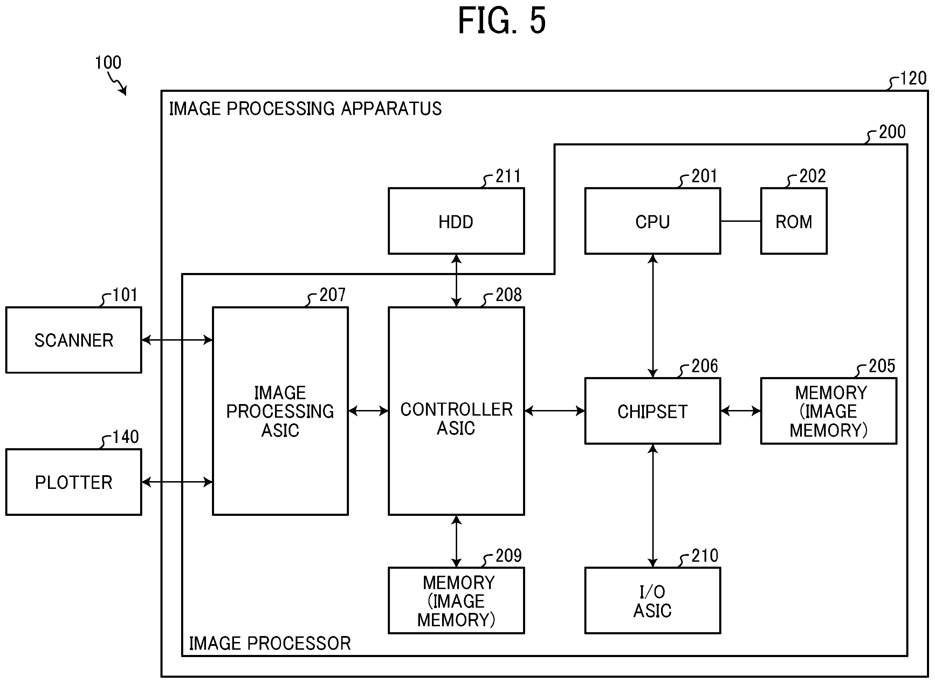

The hardware configuration of the image forming apparatus 100 is described below with reference to FIG. 5.

FIG. 5 is a block diagram illustrating a hardware configuration of the image forming apparatus 100. As illustrated in FIG. 5, the image forming apparatus 100 includes a scanner 101, an image processing device 120, and a plotter 140.

The scanner 101 has a function of reading image data to be copied or output to an external interface, for example. The image processing device 120 performs predetermined processing on the image read by the scanner 101, generates digital image data, which is referred to as image data, and outputs the image data to the plotter 140. The plotter 140 has a function of printing the image data that has been subjected to image processing by the image processing device 120. The image processing device 120 includes an image processor 200 and a hard disk drive (HDD) 211.

The image processor 200 includes a central processing unit (CPU) 201, a read only memory (ROM) 202, a memory 205, a chipset 206, an image processing application-specific integrated circuit (ASIC) 207, a controller ASIC 208, a memory 209, and an input/output (I/O) ASIC 210. The ASIC 208 is, similarly to the CPU, an example of a processor.

The CPU 201 controls the image forming apparatus 100. The memory 205 stores a program that causes the CPU 201 to control the image forming apparatus 100, and also serves as a work area for the CPU 201. The memory 205 is an image memory for temporarily storing image data to be processed. The chipset 206 works with the CPU 201 to control access from the controller ASIC 208 and the I/O ASIC 210 to the memory 205.

The image processing ASIC 207 performs image processing on image data read by the scanner 101 and outputs the processed image data to the controller ASIC 208. In addition, the image processing ASIC 207 performs image processing on image data from the controller ASIC 208 to allow the plotter 140 to print the image data. The image processing ASIC 207 transmits the processed image data to the plotter 140 in accordance with its print timing.

The controller ASIC 208 uses the memory 205 over the chipset 206 to rotate and edit image data handled by the image forming apparatus 100. The controller ASIC 208 stores the image data in a hard disk drive (HDD) 211. The controller ASIC 208 transmits and receives the image data to and from the image processing ASIC 207. The memory 209 is used as an image memory for image processing performed by the controller ASIC 208. The HDD 211 is used to temporarily store processed image data.

The I/O ASIC 210 is an external interface that gives an additional function to the image forming apparatus 100. For example, the I/O ASIC 210 includes interfaces such as a network interface, a universal serial bus (USB), a secure digital (SD) card, an operation unit, a serial peripheral interface (SPI), an inter-integrated circuit (I2C), and a document width sensor 85 (or width detection sensor) interfaces, a hardware accelerator that accelerates image processing, and an encryption processing circuit.

The functions exerted by the image processor 200 are described below.

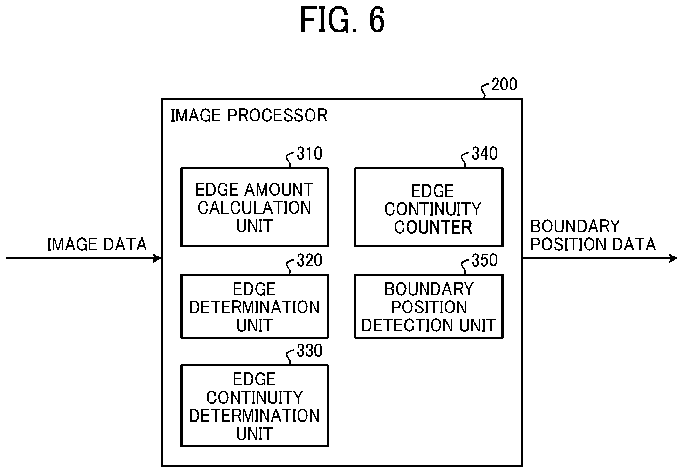

FIG. 6 is a block diagram illustrating a functional configuration of the image processor 200 according to the present embodiment. Note that a description is herein given of characteristic functions of the present embodiment among the functions exerted by the image processor 200.

As illustrated in FIG. 6, the image processor 200 includes an edge amount calculation unit 310, an edge determination unit 320, an edge continuity determination unit 330, an edge continuity counter 340, and a boundary position detection unit 350. In the present embodiment, for example, the controller ASIC 208 includes these functional units. This configuration is only one example. In some examples, these functional units are implemented by the CPU 201 executing a program.

The image processor 200 receives an image read by the scanner 101, and the image data is processed and generated by the image processing ASIC 207 included in the image processor 200.

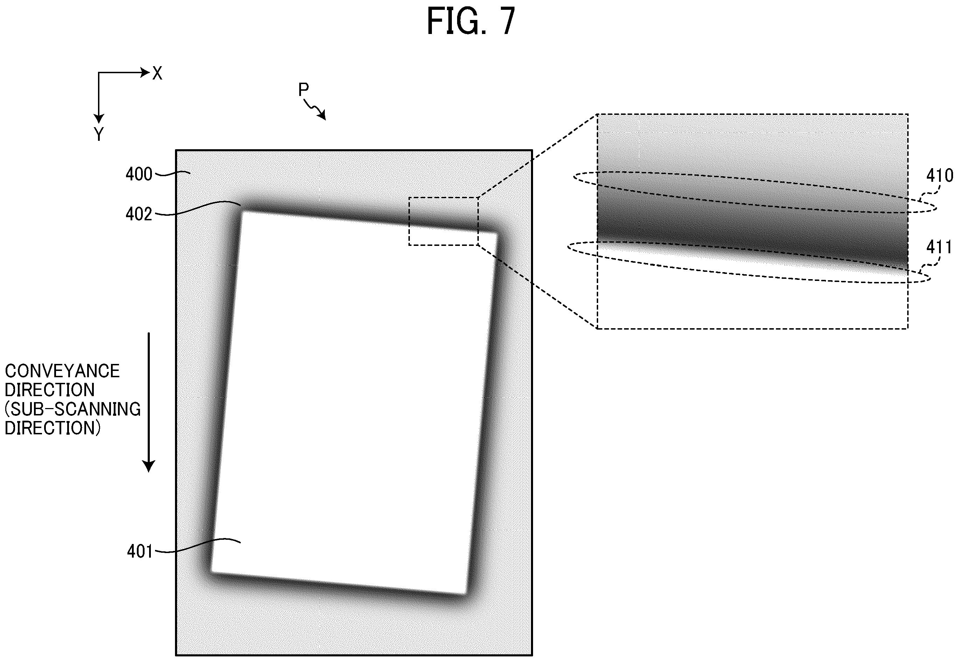

FIG. 7 is a diagram illustrating an example of image data. As illustrated in FIG. 7, image data P includes a background region 400 that indicates the background member 92, a document region 401 that indicates an object to be detected (e.g., a document), and a shadow region 402. The object to be detected is also referred to as a detection object. The document region 401 may be inclined with respect to the XY coordinates in FIG. 7 due to the manner in which the document is placed on the document tray 11 by the user, or due to tilt of the document caused by how the document is engaged with the pickup roller 61 or each conveyance roller. In this case, the X direction corresponds to a main scanning direction in reading performed by the scanner 101, and the Y direction corresponds to a sub-scanning direction in reading performed by the scanner 101.

The image data P is read in such a manner that the background region 400 is included on the upper side, lower side, left side, and right side of the document, allowing the entire document region 401 to be read even when the document is inclined.

The shadow region 402 is a region between the object to be detected and the background member 92, and is a region of a shadow generated between the background region 400 and the document region 401 when light from the light source 24 is blocked by the document. The shadow region 402 is generated at the upper, lower, left, and right boundaries of the document region 401. The enlarged view on the right side of FIG. 7 illustrates a shadow region 402 on the upper side of the document region 401 and its surrounding region. The shadow region 402 includes a region 410 in which the shadow gradually becomes darker from the background region 400 toward the document (or the document region 410), and a region 411 in which the shadow becomes lighter near the boundary of the document. In the present embodiment, a position at which an edge amount, which will be described below, is the largest within the region 411 is detected as a boundary position between the document as the object to be detected and the background member 92. The image processing device 120 can calculate information such as a tilt, an origin, and a size of the document based on the detected boundary position between the document and the background member 92. The image processing device 120 performs skew correction using such information, and outputs to the plotter 140 image data including the document region 401 that is not inclined with respect to the XY axes.

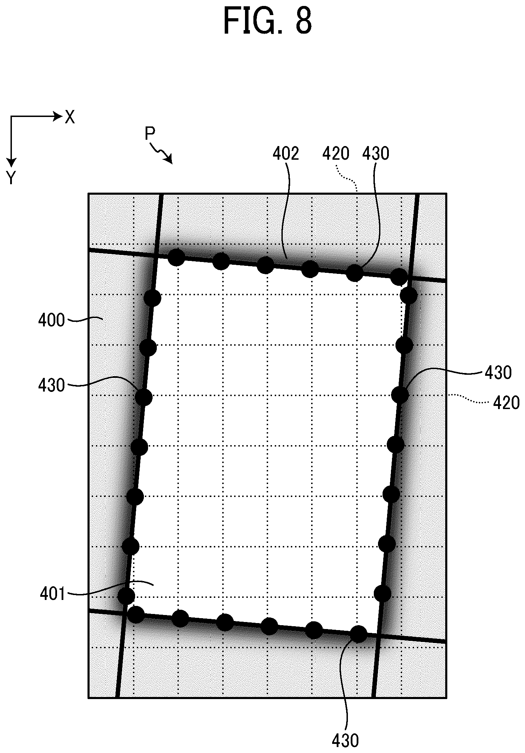

FIG. 8 is a diagram illustrating an example of a detected boundary position. The processing of detecting a boundary position (i.e., boundary detection processing) is performed in each of the X direction and the Y direction. When the boundary detection processing is performed on all pixels of the image data P, a processing load becomes large, and noise caused by a small change in pixel value is also detected. In view of this, the image processing device 120 performs the boundary detection processing while sequentially selecting one target pixel at a time (or one by one) in the X direction and the Y direction, and performing processing such as calculation of an edge amount and determination of the edge amount on each selected target pixel. The target pixels, which are pixels to be subjected to processing such as calculation of the edge amount and determination of the edge amount, are sequentially selected for each of lines 420 that are spaced at a certain interval, as indicated by dotted lines in FIG. 8, for example. Black dots in FIG. 8 indicate boundary positions 430 that are detected by the boundary detection processing for the lines 420. In the boundary detection processing for each of the lines 420, one or two boundary positions 430 are detected. The image processing device 120 includes a tilt detection unit, and the tilt detection unit detects an inclination of the object to be detected by obtaining an approximate straight line from multiple boundary positions 430 detected by the boundary detection processing, using a method such as a least squares method or a Hough transform. That is, the tilt detection unit can obtain straight lines corresponding to four sides of the document as the object to be detected, and can obtain a tilt of each of the straight lines. The image processing device 120 includes a correction unit, and the correction unit performs skew correction for correcting a tilt of the detection object included in the image data P, based on the tilt detected by the inclination detection unit.

The edge amount calculation unit (310) calculates the edge amount for the target pixel selected sequentially one by one from the multiple pixels in multiple directions. The multiple directions include at least two directions orthogonal to each other.

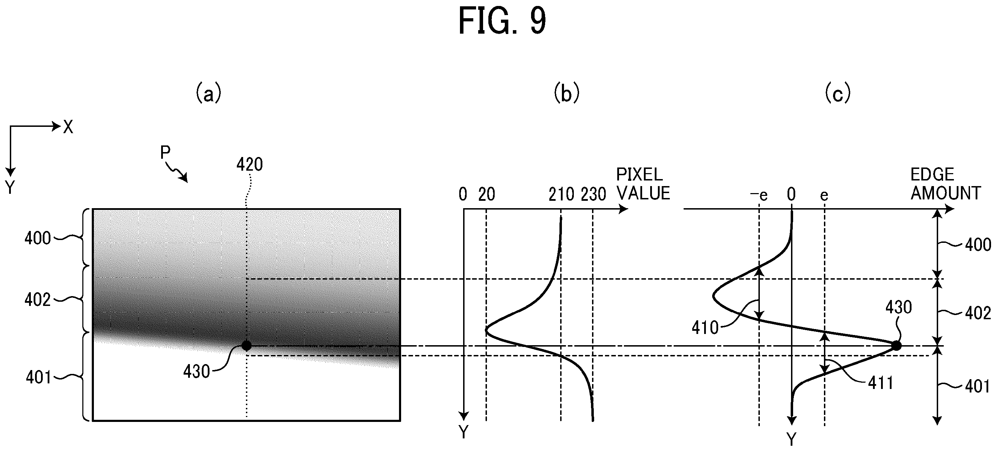

The following describes the boundary detection processing performed by each functional unit in FIG. 6 with reference to FIGS. 9 to 12. FIG. 9 is a diagram illustrating the relationship between pixel values, edge amounts, and a boundary position 430 of image data. The edge amount is an amount representing a change in a pixel value of a target pixel, and is obtained based on, for example, a change amount in a pixel value in the X direction or the Y direction of peripheral pixels adjacent to the target pixel.

FIG. 9(a) is an enlarged view of the shadow region 402 and its surrounding region in the image data P. As illustrated in FIG. 9(a), the boundary detection processing is performed on a line 420 in the Y direction to detect a boundary position 430.

FIG. 9(b) is a graph representing pixel values or gradation values at the respective positions in the Y direction on the line 420. The pixel value represents brightness or luminance, and a pixel value is larger for a brighter pixel and smaller for a darker pixel. A pixel value decreases from 210 [digit] to 20 [digit] as the pixel transitions from the background region 400 to the shadow region 402 along the Y direction. Subsequently, the pixel value increases to 230 [digit] as the pixel transitions from the shadow region 402 to the document region 401.

FIG. 9(c) is a graph representing edge amounts at the respective positions in the Y direction on the line 420.

The edge amount calculation unit 310 calculates an edge amount indicating a change, such as an increase or a decrease, in pixel values in the shadow region 402. The shadow region 402 is a region between an object to be detected, such as a document, and the background member 92 in the image data P, which includes the object to be detected and the background member 92 and is captured by the imager 28 of the scanner 101. The edge amount indicates a change in pixel value between multiple pixels, the multiple pixels including a target pixel and peripheral pixels adjacent to the target pixel. The edge amount can be obtained using, for example, a derivative filter.

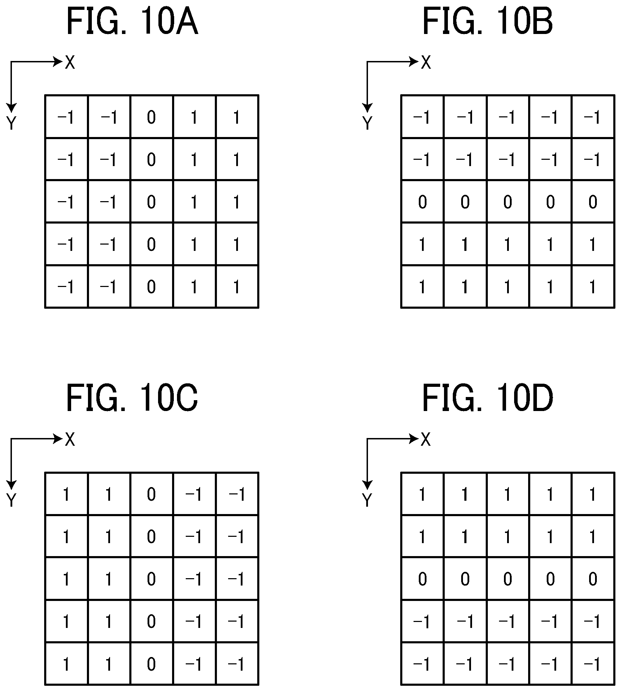

FIGS. 10A, 10B, 10C, and 10D are diagrams representing examples of weight coefficients of a derivative filter. The edge amount calculation unit 310 calculates, as the edge amount, a differential amount obtained by applying weight coefficients, as illustrated in FIGS. 10A, 10B, 10C, and 10D, to pixel values in a 5-by-5 pixel region having a target pixel at its center. In FIG. 10A, the weight coefficients are used to calculate an edge amount that indicates a change in pixel values in the X direction. In FIG. 10B, the weight coefficients are used to calculate an edge amount that indicates a change in pixel values in the Y direction. In FIG. 10C, the weight coefficients are used to calculate an edge amount that indicates a change in pixel values in the -X direction. In FIG. 10D, the weight coefficients are used to calculate an edge amount that indicates a change in pixel values in the -Y direction. In the derivative filters of FIGS. 10A, 10B, 10C, and 10D, the weight coefficient corresponding to the target pixel is zero (0). Accordingly, the edge amount for the target pixel is calculated as a value indicating a change in pixel values between multiple peripheral pixels adjacent to the target pixel.

In some examples, the edge amount calculation unit 310 calculates an edge amount indicating a change in pixel values in the Y direction, as illustrated in FIG. 9(c), by applying the weight coefficients illustrated in FIG. 10B to the pixel values in FIG. 9(a). In the following description, unless otherwise specified, the edge amount indicates a change in pixel values in either the X direction or the Y direction. The size of the derivative filter is not limited to 5 by 5. For example, the derivative filter may have a size of 3 by 3, 7 by 5, or another appropriate size. The weight coefficients may be values other than 1, 0, and -1, and may include non-integer values. The edge amount is not limited to a differential amount. For example, a difference in pixel values between the target pixel and its peripheral pixel may be calculated as the edge amount. In this case, processing such as smoothing of pixel values may be performed in advance to prevent the edge amount from being affected by noise.

The image processing device 120 includes a derivative filter that applies weight coefficients of the derivative filter to pixel values of the target pixel and the peripheral pixels to obtain a differential amount; and calculates the edge amount based on the differential amount.

The edge determination unit 320 determines whether the target pixel is an edge based on the edge amount calculated by the edge amount calculation unit 310. In the present embodiment, when the edge amount of the target pixel is sufficiently large, the target pixel is regarded as an edge. In the following description, such a pixel determined to be an edge is referred to, as appropriate, as an edge pixel. The edge determination unit 320 determines that the target pixel corresponds to an edge when the edge amount of the target pixel is greater than a predetermined threshold value e. The threshold value e is, for example, a value set in advance by experiments at a production facility. A single threshold value may be set, or different threshold values may be set depending on the type of document.

The threshold value may be dynamically changed in accordance with, for example, the use state of the scanner 101. The edge determination unit 320 determines that a target pixel included in a region 410 in which the edge amount is smaller than -e or a region 411 in which the edge amount is greater than e is an edge, as illustrated in FIG. 9(c). In this case, the region 410 is an edge region in which the pixel value changes to become darker and the edge amount is negative, whereas the region 411 is an edge region in which the pixel value changes to become brighter and the edge amount is positive.

When edge determination unit 320 determines that the target pixel is an edge, the edge continuity determination unit 330 determines whether the edge at the target pixel is continuous to its adjacent pixel. In other words, the edge continuity determination unit 330 determines whether the edge at the target pixel forms part of a continuous edge. For example, when the sign indicating the positive or negative of the edge amount of the target pixel is the same as the sign of the edge amount of the adjacent pixel (that is, when the sign of the edge amount does not change), the edge continuity determination unit 330 determines that the edge at the target pixel forms part of a continuous edge. When the boundary detection processing is performed on each pixel on the line 420 in the X direction, the adjacent pixel is a pixel adjacent to the left of the target pixel. When the boundary detection processing is performed on each pixel on the line 420 in the Y direction, the adjacent pixel is a pixel adjacent to the upper side of the target pixel. The pixel value increases when the sign of the edge amount is positive, and the pixel value decreases when the sign of the edge amount is negative. In the above-described example, the edge continuity determination unit 330 determines whether the edge is continuous to the adjacent pixel, based on whether the direction of change in the pixel value of the target pixel (i.e., increasing or decreasing) is the same as that of its adjacent pixel. In other words, the edge continuity determination unit 330 determines whether the target pixel determined to be an edge and its adjacent pixel form a continuous edge based on the edge amount for each of the target pixel and its adjacent pixel.

The edge continuity counter 340 counts an edge continuity number, which indicates the number of consecutive target pixels that are each determined to correspond to an edge and that are also determined to form a continuous edge, as determined by the edge continuity determination unit 330.

When the current target pixel is not an edge and the number of consecutive pixels preceding a previously selected target pixel immediately before the current target pixel is greater than a predetermined number N, the boundary position detection unit 350 detects, as a boundary position, a pixel position at which the edge amount is the largest among the consecutive edges (i.e., consecutive edge pixels) up to the pixel immediately before the current target pixel. The boundary position detection unit 350 detects the boundary position in the same manner even when it is determined that the edge at the target pixel is not continuous to the adjacent pixel (i.e., the edge at the target pixel does not form part of a continuous edge).

An image processing device (120) includes: a processor (208) that controls a scanner to capture image data of a detection object overlapping a background member (92); and sequentially selects a target pixel one by one from multiple pixels of the image data; an edge amount calculation unit (310) that calculates an edge amount for the target pixel selected (S101), the edge amount indicating a change in pixel value between the target pixel selected and peripheral pixels adjacent to and surrounding the target pixel selected, in a shadow region (402) in the image data, between: an object region (401) corresponding to the detection object; and a background region (400) corresponding to the background member (92); an edge determination unit (320) that determines whether the target pixel selected corresponds to an edge of the detection object, based on the edge amount calculated (S102) calculated by the edge amount calculation unit (310); an edge continuity determination unit (330) that determines whether the edge is a part of a continuous edge, based on the edge amount calculated for the target pixel selected (S 103), in response to a determination that the target pixel corresponds to the edge (YES in S 102); an edge continuity counter (340) that counts an edge continuity number for the target pixel selected, the edge continuity number for the target pixel selected representing a number of target pixels, each corresponding to the edge of the part of the continuous (S104); and a boundary position detection unit (350). The boundary position detection unit (350) counts the edge continuity number for a previous target pixel selected immediately before the target pixel selected and determines whether the edge continuity number for the previous target pixel is greater than a preset number (S105) in response to a determination that the target pixel selected does not correspond to the edge (NO in S102); and detects a boundary position between the detection object and the background member, based on the edge amount of each of the target pixels forming the continuous edge up to the previous target pixel (S106), in response to a determination that the edge continuity number for the previous target pixel is greater than the preset number (YES in S105).

The boundary position detection unit (350) further: determines whether the edge continuity number for the previous target pixel forming the part of the continuous edge is greater than preset number (S105), in response to a determination that the edge is not the part of the continuous edge (NO in S103); and detects the boundary position between the detection object and the background member, based on the edge amount of each of the target pixels corresponding to the edge of the part of the continuous edge (S106), in response to a determination that the edge continuity number for the previous target pixel forming the part of the continuous edge is greater than preset number (YES in S105).

The boundary position detection unit (350) detects, as the boundary position, a position of the target pixel having the largest edge amount among the target pixels each corresponding to the edge of the part of the continuous edge.

In FIG. 9(c), a position at which the edge amount is the largest in the region 411 is detected as the position at which the edge amount is maximum among the consecutive edge pixels. The detected position corresponds to the boundary position 430 in FIG. 9(a). In FIG. 9, the edge is also continuous in the region 410. However, in the present embodiment, the boundary position is detected in the region 411 where the pixel value increases (i.e., the pixel becomes brighter), and is not detected in the region 410 where the pixel value decreases (i.e., the pixel becomes darker).

The number N is, for example, a natural number set in advance by experiments at a production facility. Setting an appropriate value for the number N prevents the boundary position from being erroneously detected in regions affected by artifacts such as dust or scratches. A single value may be set for the number N, or different values may be set depending on the type of document. The value may be dynamically changed in accordance with, for example, the use state of the scanner 101.

In this manner, the boundary position detection unit 350 extracts a continuous edge segment in which edge pixels are consecutive and the number of consecutive edge pixels is greater than a predetermined number N, and detects a boundary position within that segment based on the edge amounts of the edge pixels. In the above example, the pixel position at which the edge amount is the largest within the continuous edge segment is set as the boundary position. However, the method for determining the boundary position is not limited to this approach. For example, a first pixel position at which the edge amount is the largest and a second pixel position at which the edge amount is the second largest within the continuous edge segment are obtained, and a weighted average of these positions may be used as the boundary position. In this case, for example, the largest edge amount and the second largest edge amount may be used as weights.

An image processing device (120) includes: a processor (208) that controls a scanner to capture image data of a detection object overlapping a background member (92); and selects a target pixel from multiple pixels of the image data; a boundary position detection unit (350) that extracts a continuous edge segment in which pixels are consecutive, each of the target pixels having a change in pixel value being greater than a predetermined threshold and the number of the target pixels exceeding a preset number (N), the change in pixel value being between: the target pixel selected and peripheral pixels adjacent to and surrounding the target pixel selected, in a shadow region (402) in the image data, between an object region (401) corresponding to the detection object and a background region (400) corresponding to the background member (92); and detects boundary positions between the detection object and the background member, based on the change in pixel value of each of the target pixels within the continuous edge segment; a tilt detection unit that detects a tilt of the detection object based on the multiple boundary positions; and a correction unit that corrects a tilt of the detection object included in the image data, based on the detected tilt.

The boundary position detection unit 350 may omit the processing of detecting the boundary position when it is determined that the edge of the target pixel is not continuous to its adjacent pixel. For example, when the target pixel correspond to an edge and the probability of the edge at the target pixel forming part of a continuous edge is high, the processing of detecting the boundary position may be omitted in response to a determination that the edge at the target pixel does not form part of a continuous edge.

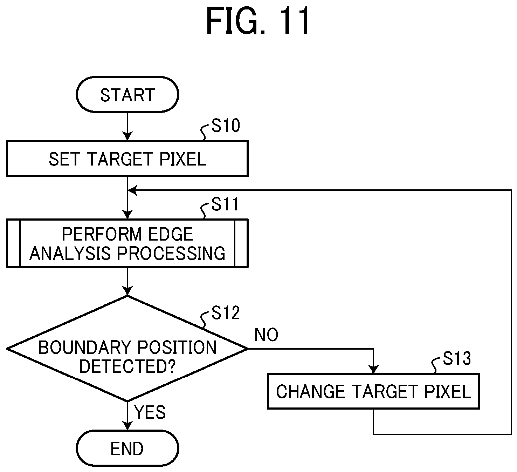

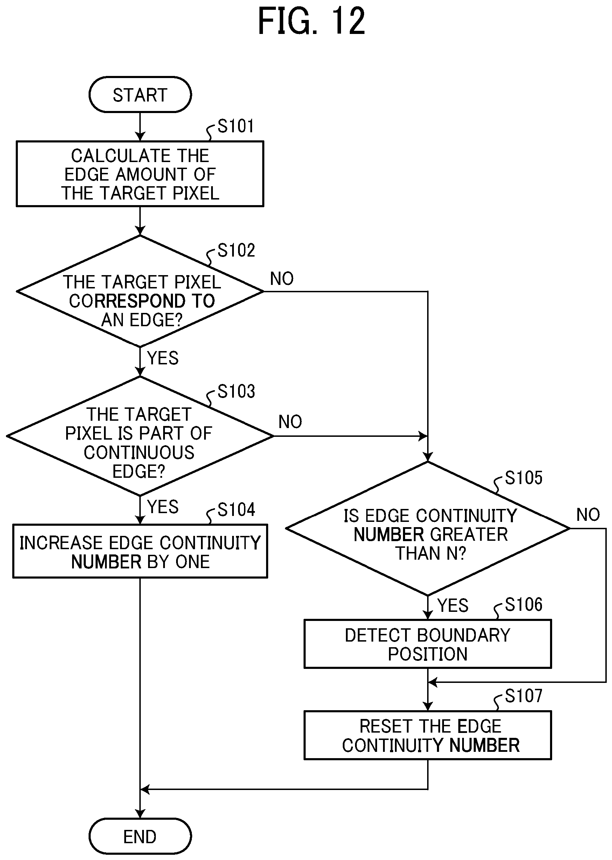

FIG. 11 is a flowchart presenting boundary detection processing according to the present embodiment. In step S10, the image processor 200 sets a target pixel. In step S11, the image processor 200 performs edge analysis processing illustrated in FIG. 12 on the target pixel. The edge analysis processing analyzes the edge amount of the target pixel as described later, and updates the number of consecutive edge pixels, i.e., the edge continuity number, or detects the boundary position. Note that, in a case where the boundary detection processing is performed in the X direction for each pixel of the line 420 illustrated in the horizontal direction in FIG. 8, the target pixel is set to the pixel at the left end of the line 420 in step S10. Note that, in a case where the boundary detection processing is performed in the Y direction for each pixel of the line 420 illustrated in the vertical direction in FIG. 8, the target pixel is set to the pixel at the upper end of the line 420 in step S10.

If the boundary position is detected by the edge analysis processing (YES in step S12), the boundary detection processing ends. If the boundary position is not detected by the edge analysis processing (NO in step S12), the image processor 200 changes the target pixel in step S13. Then, the process returns to step S11 to perform the edge analysis processing on the updated target pixel. Note that, in a case where the boundary detection processing is performed in the X direction for each pixel of the line 420 illustrated in the horizontal direction in FIG. 8, the target pixel is changed to the pixel that is adjacent to the right of the target pixel in step S13. Note that, in a case where the boundary detection processing is performed in the Y direction for each pixel of the line 420 illustrated in the vertical direction in FIG. 8, the target pixel is changed to the pixel that is adjacent to the lower side of the target pixel in step S13.

FIG. 12 is a flowchart of the edge analysis processing according to the present embodiment. In step S101, the edge amount calculation unit 310 calculates the edge amount of the target pixel. Note that, the edge amount may be calculated for the target pixel each time. However, the edge amount of each pixel on the line 420 may be calculated in advance, stored in the memory 205, the memory 209, or the HDD 211, and read out at the time of the edge analysis processing of the target pixel.

In step S102, the edge determination unit 320 determines whether the target pixel is an edge. If the edge determination unit 320 determines that the target pixel is an edge (YES in step S102), the process proceeds to step S103. If the edge determination unit 320 determines that the target pixel is not an edge (NO in step S102), the process proceeds to step S105.

In step S103, the edge continuity determination unit 330 determines whether the edge of the target pixel is continuous to its adjacent pixel. In other words, the edge continuity determination unit 330 determines whether the edge at target pixel forms part of a continuous edge. If the edge continuity determination unit 330 determines that the edge is continuous (YES in step S103), the edge continuity counter 340 increments the edge continuity number (i.e., the number of consecutive edge pixels) by one in step S104. If the edge continuity determination unit 330 determines that the edge is not continuous (NO in step S103), the process proceeds to step S105. As described above, when the edge is continuous, the edge continuity number, which is the number of consecutive edge pixels, is updated by incrementing it by one. It is assumed that the edge continuity number is reset to zero at the start of the boundary detection processing.

In step S105, the boundary position detection unit 350 determines whether the edge continuity number counted up to a previous target pixel selected immediately before the target pixel is greater than a predetermined number N. If the edge continuity number is greater than N (YES in step S105), the boundary position detection unit 350 detects, as the boundary position, a pixel position at which the edge amount is the largest among the consecutive edge pixels in step S106. If the edge continuity number is not greater than N (NO in step S105), the process proceeds to step S107.

In step S107, the edge continuity counter 340 resets the edge continuity number to zero.

The edge continuity counter (340) resets the edge continuity number after the determination as to whether the edge continuity number is greater than preset number (N) by the boundary position detection unit (350) (S105).

In the above description, the processing of detecting the boundary of the left side of the document while changing the target pixel from the left end of the line 420 in the X direction, or the processing of detecting the boundary of the upper side of the document while changing the target pixel from the upper end of the line 420 in the Y direction, has been described. The change in pixel value on the right side or the lower side of the document is opposite to that on the left side or the upper side. In the boundary detection processing on the right side of the document, the same detection can be performed using the derivative filter illustrated in FIG. 10C, and in the boundary detection processing on the lower side of the document, the same detection can be performed using the derivative filter illustrated in FIG. 10D. In this case, the boundary position is detected in a region where the pixel value decreases, that is, where the pixel becomes darker. The derivative filters of FIGS. 10A and 10B may be used on the right side and the left side, respectively. In this case, the boundary position detection unit 350 may detect, as the boundary position, a pixel position at which the edge amount is the smallest among the consecutive edge pixels when the edge continuity number is greater than the predetermined number N.

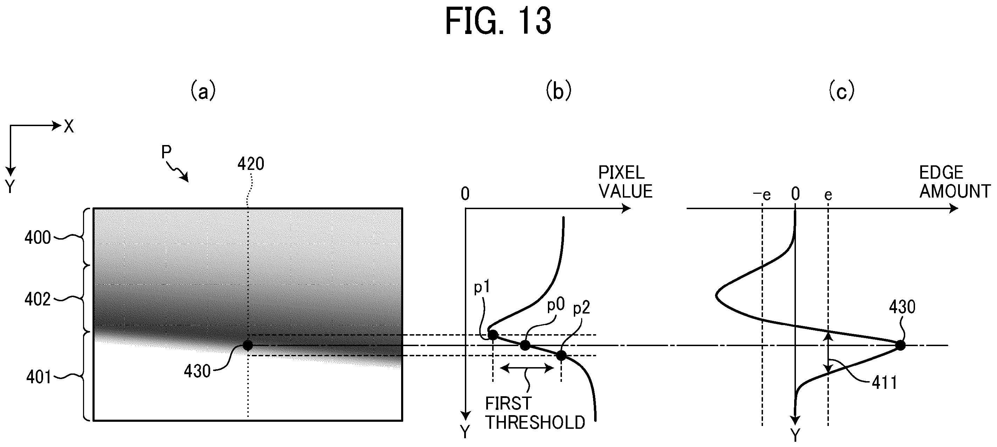

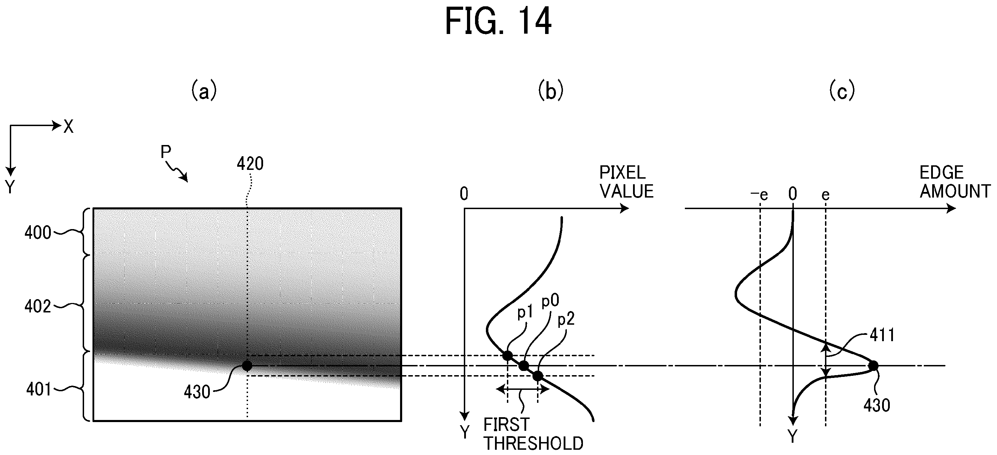

The following describes the effects of the boundary detection processing described above with reference to FIGS. 13 and 14.

FIG. 13 is a diagram illustrating an example of the boundary detection processing according to the present embodiment. The image data P of FIG. 13(a) is the same as the image data P of FIG. 9(a). In a conventional technique disclosed in JP2018-098723, it is determined whether a difference in pixel value between a first pixel p1 and a second pixel p2, each spaced apart from a target pixel p0 by a first distance(as illustrated in FIG. 13(b) of the present application), exceeds a first threshold. In this example, since the difference between the first pixel p1 and the second pixel p2 exceeds the first threshold, the target pixel p0 is regarded as a candidate for the boundary position between the document and the background member. In the present embodiment, the edge continuity determination unit 330 determines that the pixels in the region 411 illustrated in FIG. 13(c) form a continuous edge, and the boundary position detection unit 350 detects, as the boundary position 430, the position at which the edge amount is the largest within the region 411.

FIG. 14 is a diagram illustrating an example of the boundary detection processing according to the present embodiment. The image data P illustrated in FIG. 14(a) has a shadow region 402 with a width larger than that of the image data P illustrated in FIG. 9(a).

For example, the width of the shadow region 402 in the image data may increase due to an increase in the thickness of the document, a decrease in the irradiation angle of the illumination, or an increase in the distance between the document and the background member 92 beyond the usual distance. The width of the shadow region 402 may also increase due to a deterioration in a modulation transfer function (MTF) of a lens included in the light source 24 or due to the use of a lens with a low MTF resulting from variations (individual differences) in its lens performance.

In the typical technique, it is determined whether a difference in pixel value between a first pixel p1 and a second pixel p2, which are spaced apart from a target pixel p0 by a first distance (as illustrated in FIG. 14(b) of the present application), exceeds a first threshold. In this example, since the difference between the first pixel p1 and the second pixel p2 is lower than the first threshold, the target pixel p0 is not regarded as a candidate for the boundary position between the document and the background member, and thus, a desired boundary position is not detected. In the present embodiment, however, the edge continuity determination unit 330 determines that the pixels in the region 411 illustrated in FIG. 14(c) form a continuous edge, and the boundary position detection unit 350 detects, as the boundary position 430, the position at which the edge amount is the largest within the region 411.

As described above, the typical technique might fail to detect a candidate for the boundary position, due to a change in the width of the shadow region 402. However, the present embodiment allows the boundary position to be accurately detected irrespective of a change in the width of the shadow region 402.

In the present embodiment, as described above, the edge amount indicating a change in a pixel value of the image data is calculated. When the target pixel is determined not to be an edge, or the edge of the target pixel is determined not to be continuous based on the calculated edge amount, and when the number of consecutive edge pixels (i.e., the edge continuity number) is greater than a predetermined number N, a pixel position at which the edge amount is the largest among the consecutive edges (i.e., edge pixels) that are consecutive up to a pixel immediately before the target pixel is detected as the boundary position.

This configuration the boundary position from being erroneously detected in regions affected by artifacts such as dust or scratches, and also allows the boundary position to be accurately detected irrespective of a change in the width of the shadow of the object to be detected.

### Second Embodiment

A second embodiment of the present disclosure is described below.

In the present embodiment, when it is determined that the edge is continuous, a candidate position, which is a candidate for the boundary position, is updated. Like reference signs are given to elements similar to those described in the first embodiment, and their detailed description is omitted in the description of the second embodiment of the present disclosure given below.

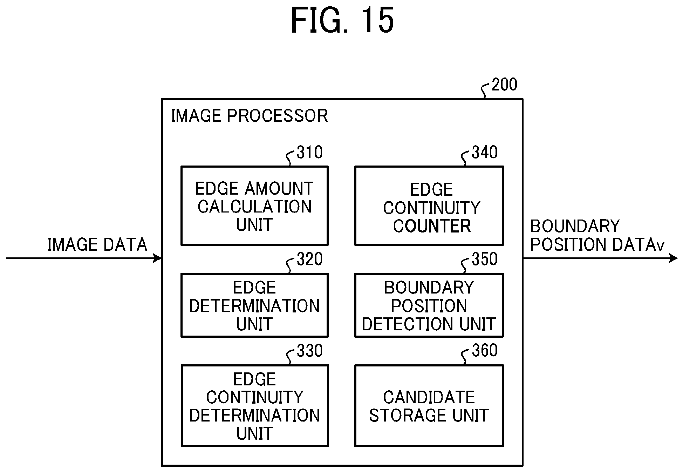

FIG. 15 is a block diagram illustrating a functional configuration of the image processor 200 according to the present embodiment. Note that a description is herein given of characteristic functions of the present embodiment among the functions exerted by the image processor 200. The second embodiment differs from the first embodiment in that the image processor 200 further includes a candidate storage unit 360. In the present embodiment, for example, the controller ASIC 208 includes the functional units of the image processor 200. This configuration is only one example. In some examples, these functional units are implemented by the CPU 201 executing a program.

The candidate storage unit 360 stores a candidate edge amount and a candidate position. The candidate edge amount is the edge amount of a pixel, which has the largest edge amount among the consecutive edge pixels, and the candidate position is the position of that pixel. More specifically, when the edge of the target pixel forms part of a continuous edge and the edge amount of the target pixel is greater than the candidate edge amount, the candidate storage unit 360 stores the edge amount of the target pixel as a new candidate edge amount. The candidate storage unit 360 stores the position of the target pixel as a candidate position. The candidate edge amount and the candidate position are stored in one or more of the memory 205, the memory 209, and the HDD 211. The initial value of the candidate edge amount is, for example, zero, and the initial value of the candidate position is, for example, the position of the target pixel at the start of the boundary detection processing.

When the target pixel is determined not to be an edge, or when the edge of the target pixel is determined not to be continuous, and when the number of consecutive edge pixels (i.e., the edge continuity number) is greater than a predetermined number N, the boundary position detection unit 350 detects, as a boundary position, the candidate position stored in the candidate storage unit 360. Thus, as in the first embodiment, a pixel position at which the edge amount is the largest among the consecutive edges (i.e., edge pixels) up to the pixel immediately preceding the current target pixel can be detected as a boundary position. In the present embodiment, the candidate edge amount and the candidate position stored in the candidate storage unit 360 are updated when the edge amount of the target pixel is greater than the candidate edge amount. Accordingly, the candidate edge amount and the candidate position are not updated in the region 410 illustrated in FIG. 9(c), and the pixel positions within the region 410 are not regarded as a candidate for the boundary position.

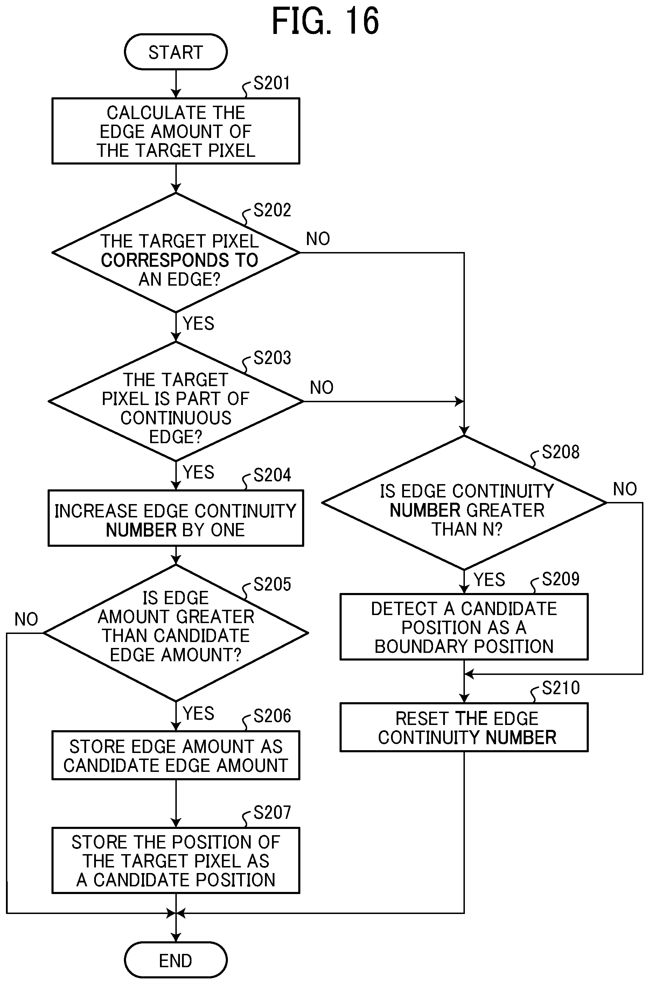

FIG. 16 is a flowchart of the edge analysis processing according to the present embodiment. The second embodiment differs from the first embodiment in that the stored candidate edge amount and candidate position are updated in steps S205 to S207, and that the most recently stored candidate position is detected as the boundary position in step S209. Processes of steps S201 to S204, S208, and S210 are the same as the operations of steps S101 to S104, S105, and S107 in FIG. 12.

In step S205, the candidate storage unit 360 compares the edge amount of the target pixel with the candidate edge amount. If the edge amount of the target pixel is greater than the candidate edge amount (YES in step S205), the candidate storage unit 360 stores the edge amount of the target pixel as a new and updated candidate edge amount in step S206, and stores the position of the target pixel as a new and updated candidate position in step S207. If the edge amount of the target pixel is not greater than the candidate edge amount (NO in step S205), the candidate edge amount and the candidate position are not updated, and the edge analysis processing ends.

In step S209, the boundary position detection unit 350 detects the most recently stored (i.e., latest) candidate position, as the boundary position.

The image processing device (120) according to any one of Aspects 4 to 6, further includes a memory (205) that stores a candidate position and a candidate edge amount of the target pixel having the largest edge amount among the target pixels each corresponding to the edge of the part of the continuous edge, in response to a determination that the edge is the part of the continuous edge (YES in S203) by the edge continuity determination unit (330). The boundary position detection unit (350) further: determines whether the edge continuity number for the previous target pixel is greater than preset number (S208), in response to either: the determination that the target pixel does not correspond to the edge (NO in S202); or the determination that the edge is not the part of the continuous edge (NO in S203); and detects, as the boundary position, the candidate position stored by the memory (205), in response to the determination that the edge continuity number for the previous target pixel is greater than preset number (YES in S208).

In the present embodiment, as described above, when the edge is determined to be continuous, the candidate position is updated. When the target pixel is determined not to be an edge, or when the edge of the target pixel is determined not to be continuous, and when the edge continuity number (i.e., the number of consecutive edge pixels) is greater than a predetermined number N, the most recently stored (i.e., latest) candidate position is detected as the boundary position. This configuration the boundary position from being erroneously detected in regions affected by artifacts such as dust or scratches, and also allows the boundary position to be accurately detected irrespective of a change in the width of the shadow of the document.

### Third Embodiment

A third embodiment of the present disclosure will be described.

In the present embodiment, whether the edge is continuous is determined based on both a comparison between the edge amount and the candidate edge amount and a change in the sign of the edge amount. Like reference signs are given to elements similar to those described in the second embodiment, and their detailed description is omitted in the description of the third embodiment of the present disclosure given below.

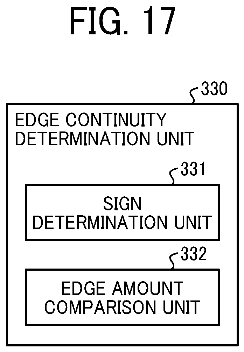

FIG. 17 is a block diagram illustrating a functional configuration of an edge continuity determination unit 330 according to the present embodiment.

Note that a description is herein given of characteristic functions of the present embodiment among the functions exerted by the edge continuity determination unit 330.

As illustrated in FIG. 17, the edge continuity determination unit 330 includes a sign determination unit 331 and an edge amount comparison unit 332. In the present embodiment, for example, the controller ASIC 208 includes the functional units of the edge continuity determination unit 330. This configuration is only one example. In some examples, these functional units are implemented by the CPU 201 executing a program.

The sign determination unit 331 determines whether the sign indicating whether the edge amount of the target pixel is positive or negative is the same as the sign of the edge amount of an adjacent pixel. In other words, the sign determination unit 331 determines whether the sign of the edge amount differs from that of the adjacent pixel. In the first and second embodiments, for example, the edge continuity determination unit 330 determines whether the edge is continuous, based on the determination result of the sign determination unit 331. In the present embodiment, the edge continuity determination unit 330 further determines whether the edge is continuous, based on the comparison result of the edge amount comparison unit 332.

The edge amount comparison unit 332 compares the edge amount of the target pixel with the candidate edge amount. The edge amount comparison unit 332 obtains, for example, a value obtained by dividing the edge amount of the target pixel by the candidate edge amount. This value represents a ratio of the edge amount of the target pixel to the candidate edge amount. The edge amount comparison unit 332 also obtains a difference value by subtracting the edge amount of the target pixel from the candidate edge amount.

The edge continuity determining unit 330 determines that the edge of the target pixel is not continuous, for example, when the ratio obtained by the edge amount comparison unit 332 is lower than a predetermined ratio R. The edge continuity determining unit 330 determines that the edge of the target pixel is not continuous, for example, when the difference value obtained by the edge amount comparison unit 332 is greater than a predetermined value D. That is, even if the sign of the edge amount of the target pixel is the same as the sign of the edge amount of the adjacent pixel, the edge continuity determination unit 330 determines that the edge of the target pixel is not continuous when the edge amount decreases, relative to the candidate edge amount, by more than the ratio R or by more than the value D. The ratio R and the value D are, for example, values set in advance by experiments at a production facility. A single value may be set for each of the ratio R and the value D, or different values may be set for each of the ratio R and the value D, depending on the type of document. The value may be dynamically changed in accordance with, for example, the use state of the scanner 101.

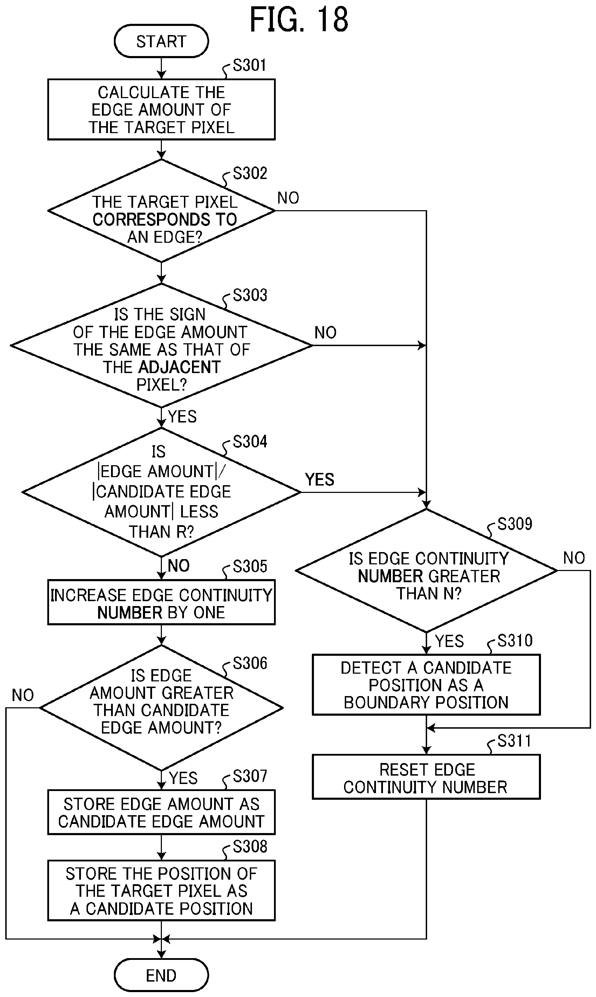

FIG. 18 is a flowchart of the edge analysis processing according to the present embodiment. This embodiment differs from the second embodiment in that it is determined whether the edge is continuous in steps S303 and S304. Processes of steps S301, S302, S305 to S311 are the same as the operations of steps S201, S202, and S204 to S210 in FIG. 16.

In step S303, the sign determination unit 331 of the edge continuity determination unit 330 determines whether the sign of the edge amount of the target pixel is the same as that of the adjacent pixel. If the signs are determined to be the same (Yes in step S303), the process proceeds to step S304. If the signs are determined not to be the same (No in step S303), the edge continuity determination unit 330 determines that the edge is not continuous. The process then proceeds to step S309.

The sign determination unit (331) that determines whether a sign of the edge amount of the target pixel selected is the same as a sign of the edge amount of the previous target pixel (S303). The edge continuity determination unit (310) determines that the target pixel selected is the part of the continuous edge, in response to a determination that the sign of the edge amount of the target pixel selected is the same as the sign of the edge amount of the previous target pixel.

The edge amount comparison unit 332 of the edge continuity determination unit 330 obtains the ratio of the edge amount of the target pixel to the candidate edge amount. If the ratio of the edge amount of the target pixel to the candidate edge amount is determined not to be less than R (No in step S304), the edge continuity determination unit 330 determines that the edge is continuous (i.e., the edge at the target pixel forms part of a continuous edge). The process then proceeds to step S305. If the ratio is determined to be less than R (YES in step S304), the edge continuity determination unit 330 determines that the edge is not continuous (i.e., the edge at the target pixel does not form part of a continuous edge). The process then proceeds to step S309.

The edge continuity determination unit (330) further: determines whether a ratio of the edge amount of the target pixel to the candidate edge amount is less than a preset ratio (R) (S304); and determines that the edge is not the part of the continuous edge, in response to a determination that the ratio is less than the preset ratio (R) (YES in S304).

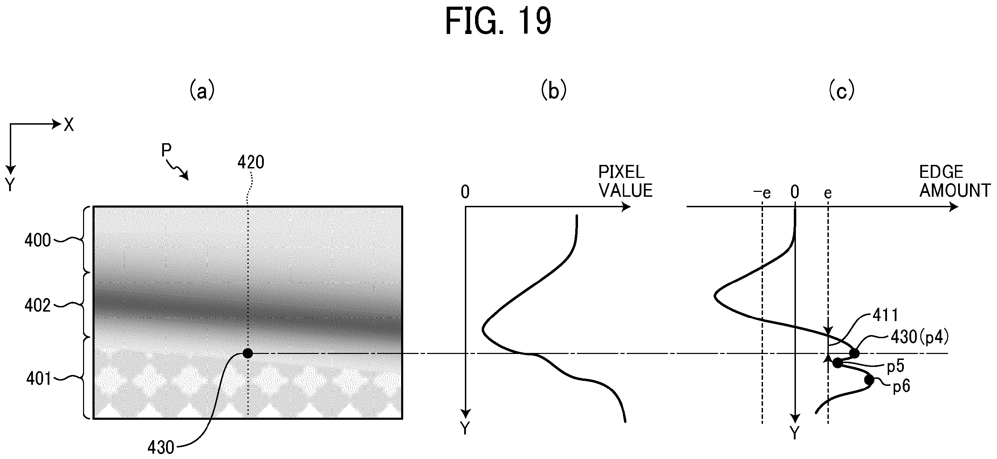

The following describes the effects of the boundary detection processing with reference to FIG. 19.

FIG. 19 is a diagram illustrating an example of the boundary detection processing according to the present embodiment. The image data P illustrated in FIG. 19(a) is obtained by reading a document that includes a pattern. A document region 401 includes pixel values that correspond to the pattern. FIG. 19(b) presents pixel values on a line 420 in the image data P. FIG. 19(c) presents the edge amounts corresponding to the pixels on the line 420. In such a case, as illustrated in FIG. 19(c), the edge amount is the largest at a pixel p6 located below a boundary position 430 at a pixel p4. This pixel p6 may be erroneously detected as the boundary position in the boundary detection processing of the first embodiment or the second embodiment.

However, as illustrated in FIG. 19(c), the edge amount at a pixel p5 is lower than the edge amount at the pixel p4 (i.e., the candidate edge amount). In such a case, in the present embodiment, the edge continuity determination unit 330 determines that the edge is not continuous to the pixel p5 in the present embodiment. In the present embodiment, the edge is determined to be continuous within the region 411 illustrated FIG. 19(c). The boundary position detection unit 350 detects, as the boundary position 430, the position at the pixel p4 at which the edge amount is the largest within the region 411.

In the present embodiment, whether the edge is continuous is determined based on both a comparison between the edge amount and the candidate edge amount and a change in the sign of the edge amount. This prevents erroneous detection of the boundary position that may be affected by a change in a pixel value within the document area, and enables accurate detection of the boundary position.

### Fourth Embodiment

A fourth embodiment of the present disclosure is described below.

In the present embodiment, whether the edge is continuous is determined based on both the edge amount and the change in the sign of the edge amount. In the following description of the third embodiment, the description of the same configurations as in the first embodiment will be omitted, and those different from the first embodiment will be described.

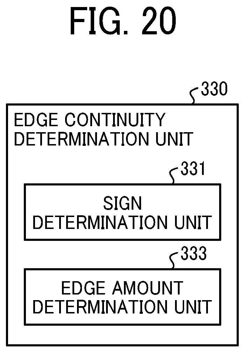

FIG. 20 is a block diagram illustrating a functional configuration of the edge continuity determination unit 330 according to the present embodiment.

Note that a description is herein given of characteristic functions of the present embodiment among the functions exerted by the edge continuity determination unit 330.

As illustrated in FIG. 20, the edge continuity determination unit 330 includes a sign determination unit 331 and an edge amount determination unit 333. In the present embodiment, for example, the controller ASIC 208 includes the functional units of the edge continuity determination unit 330. This configuration is only one example. In some examples, these functional units are implemented by the CPU 201 executing a program.

As in the third embodiment, the sign determination unit 331 determines whether the sign indicating whether the edge amount of the target pixel is positive or negative is the same as the sign of the edge amount of an adjacent pixel.

The edge amount determination unit 333 determines whether the edge amount of the target pixel is greater than an edge threshold value E. The edge threshold value E is used when reading a thick document, such as a credit card or a point card to identify an edge amount that is extremely high due to light reflected from the edge-side surface of the document. The value E is, for example, a value set in advance by experiments at a production facility. A single value may be set for the value E, or different values may be set depending on the type of document. The value may be dynamically changed in accordance with, for example, the use state of the scanner 101.

When edge amount determination unit 333 determines that the edge amount of the target pixel is greater than the edge threshold value E, the edge continuity determination unit 330 determines that the edge of the target pixel is not continuous.

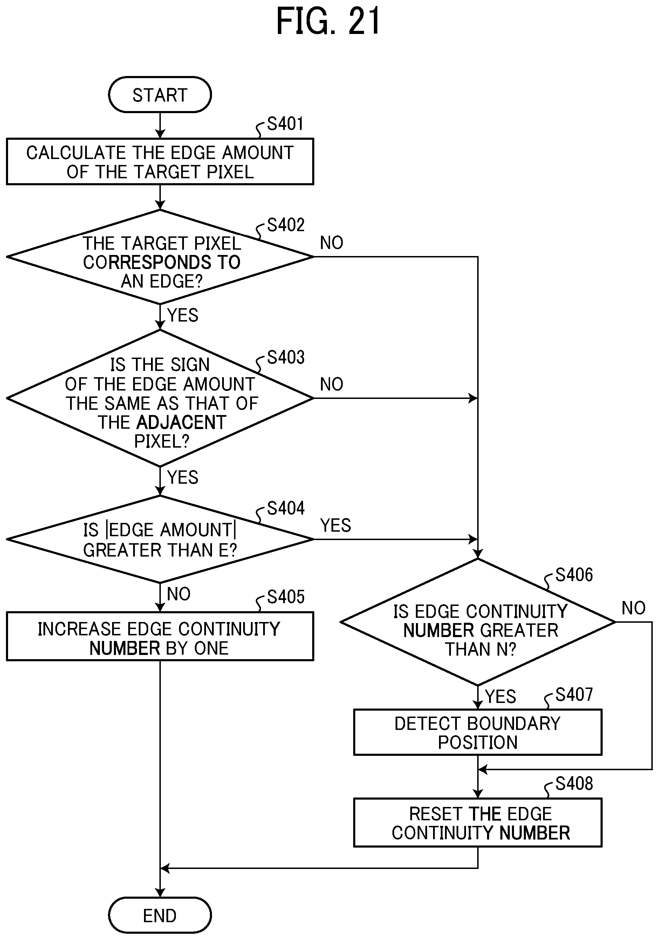

FIG. 21 is a flowchart of the edge analysis processing according to the present embodiment. This embodiment differs from the first embodiment in that it is determined whether the edge is continuous in steps S403 and S404. Processes of steps S401, S402, S405 to S408 are the same as the operations of steps S101, S102, and S104 to S107 in FIG. 12.

In step S403, the sign determination unit 331 of the edge continuity determination unit 330 determines whether the sign of the edge amount of the target pixel is the same as that of the adjacent pixel. If the signs are determined to be the same (Yes in step S403), the process proceeds to step S404. If the signs are determined not to be the same (No in step S403), the edge continuity determination unit 330 determines that the edge is not continuous. The process then proceeds to step S406.

The edge amount determination unit 333 of the edge continuity determination unit 330 determines whether the edge amount of the target pixel is greater than the edge threshold value E. If the edge amount of the target pixel is determined not to be greater than E (No in step S404), the edge continuity determination unit 330 determines that the edge is continuous. The process then proceeds to step S405. If the edge amount of the target pixel is determined to be greater than E (YES in step S404), the edge continuity determination unit 330 determines that the edge is not continuous. The process then proceeds to step S406.

The edge continuity determination unit (330) further: determines whether the edge amount of the target pixel is greater than a preset value (E) (S404); and determines that the edge is not the part of the continuous edge, in response to a determination that the edge amount of the target pixel is greater than the preset value (E).

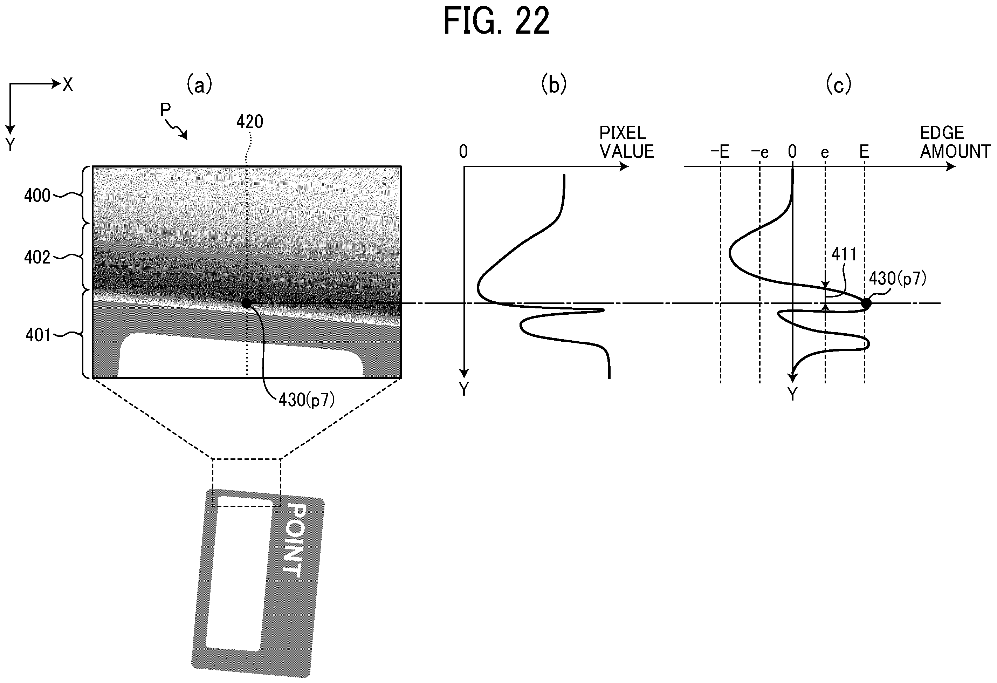

The following describes the effects of the boundary detection processing with reference to FIG. 22.

FIG. 22 is a diagram illustrating an example of the boundary detection processing according to the present embodiment. The upper portion of FIG. 22(a) is an enlarged view of image data P, which corresponds to an upper end portion of a card illustrated in the lower portion of FIG. 22(a). As illustrated in FIG. 22(a), the image data P includes a white region at a lower end portion of a shadow region 402, the white region corresponding to light reflected from the edge-side surface of the card. FIG. 22(b) presents pixel values on a line 420 in the image data P. FIG. 22(c) presents the edge amounts of the pixels on the line 420. As illustrated in FIG. 22(c), the edge amount is extremely high in the white region corresponding to the light reflected from the edge-side surface of the card. The edge amount exceeds the edge threshold value E at an adjacent pixel that is processed immediately after a pixel p7.

In such a case, in the present embodiment, the edge continuity determination unit 330 determines that the pixels including the pixel p7 within the region 411 are continuous, and the boundary position detection unit 350 detects, as the boundary position 430, the position of the pixel p7 at which the edge amount is the largest within the region 411. In FIG. 22, the edge continuity number (i.e., the number of consecutive edge pixels) within the region 411 is small. For a document such as a card on which light is reflected at an edge-side surface, the predetermined number N may be set to a small value.

In the present embodiment, whether the edge is continuous is determined based on both the edge amount and the change in the sign of the edge amount. This configuration enables accurate detection of the boundary position, irrespective of an object to be detected, such as a card on which light reflection occurs at the edge-side surface.

### Fifth Embodiment

A fifth embodiment of the present disclosure is described below.

In the fifth embodiment, the image processing device 120 according to any one of the first to the fourth embodiment is incorporated in an apparatus such as a factory automation (FA) inspection apparatus. In the following description of the fifth embodiment, the description of portions that are the same as those in the first embodiment to the fourth embodiment is omitted, and the differences from the first embodiment to the fourth embodiment are described.

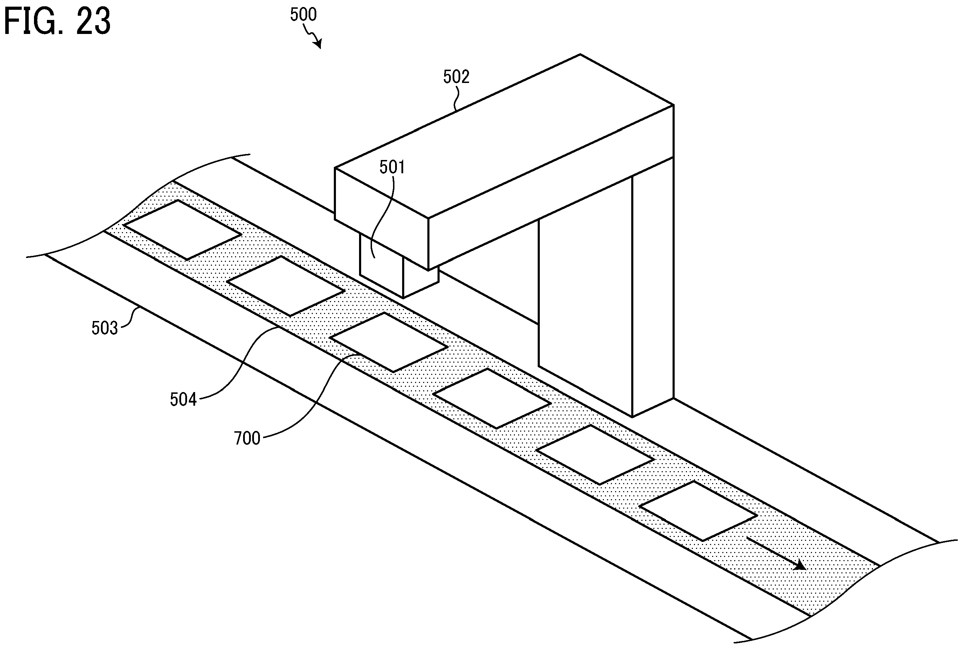

FIG. 23 is a diagram of a configuration of an inspection apparatus 500 according to the present embodiment. The inspection apparatus 500 includes an imager 501, a controller 502, a table 503, and a belt conveyor 504.

The inspection apparatus 500 inspects the appearance of a test device 700, which is an object to be detected and is conveyed by a belt conveyor 504, by capturing an image of the test device 700 with an imager 501.

The controller 502 controls the entire operation of the inspection apparatus 500. The controller 502 includes the image processing device 120 according to any one of the first to fourth embodiments, and performs image processing on image data of the test device 700 that is read by the imager 501.

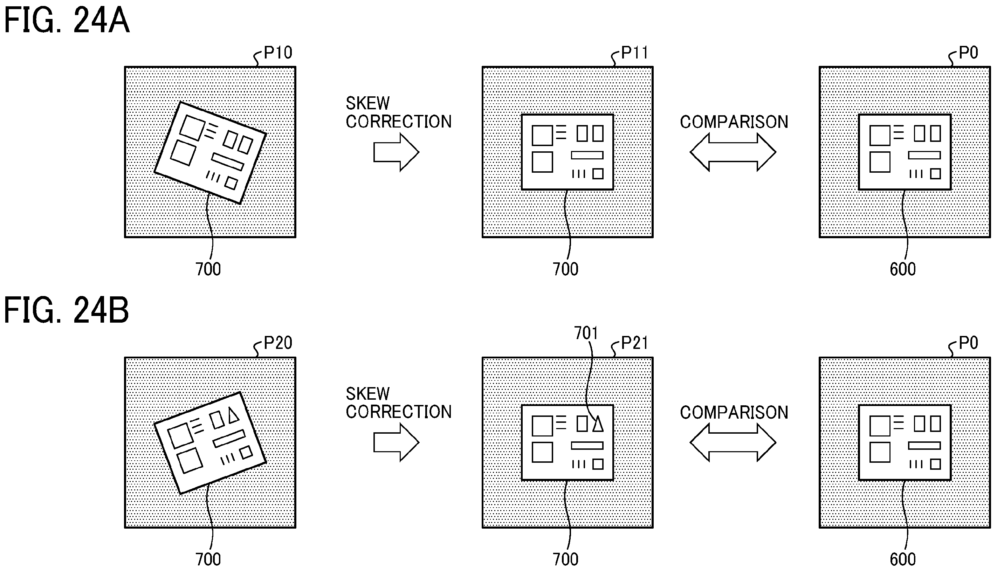

FIGS. 24A and 24B are diagrams each illustrating inspection processing performed by the inspection apparatus 500. In FIG. 24A, a read image P10 is an image obtained by reading the test device 700, with the imager 501 inclined, and a corrected image P11 is an image obtained by performing skew correction on the read image P10 using the image processing device 120. Similarly, in FIG. 24B, a read image P20 is an image obtained by reading a test device 700, which is different from the test device 700 of FIG. 24A, using the imager 501, and a corrected image P21 is an image obtained by performing skew correction on the read image P20. In FIGS. 24A and 24B, a correct image P0 is image data captured by a test device 600, which has a correct appearance and is not inclined.

In FIG. 24A, the image processing device 120 detects boundary positions of the test device 700 in the read image P10 through the boundary detection processing according to any one of the first to the fourth embodiments, and performs screw correction based on the detected boundary positions. Then, the image processing device 120 compares the corrected image P11 after the skew correction with the correct image P0, and inspects whether the appearance is free from external defects. In this example, the shape and position of the component on a board of the test device 700 are determined to be the same as those of the test device 600 in the correct image P0.

Similarly, in FIG. 24B, the image processing device 120 detects the boundary positions of the test device 700 in the read image P20, perform skew correction based on the detected boundary positions, and compares the corrected image P21 after the skew correction with the correct image P0, to inspect whether the appearance is free from external defects. In this example, the shape of a component 701 on a board of the test device 700 is different from that of the test device 600 in the correct image P0. Thus, it is determined that the appearance has no external defects.

The present embodiment provides an inspection apparatus that accurately detects a boundary position of the test device 700, using the boundary detection processing according to any one of the first embodiment to the fourth embodiment, and performs skew correction based on the detected boundary position to inspect the appearance of the test device 700. Note that, although the test device 700 has been described as an example of the object to be detected by the inspection apparatus 500, the object to be detected is not limited to the test device 700 as long as the tilt can be detected based on a boundary with a background member (e.g., the belt conveyor 504 in the present embodiment).

In each of the above embodiments, the object to be detected is conveyed and its image is captured by the fixed imager. This is only one example. In some examples, the tilt of an immobile object to be detected is detected by a moving imager.

Note that in the first to fourth embodiments, the image processing device is applied to an MFP having at least two of copying, printing, scanning, and facsimile functions. Alternatively, the image processing device may be applied to, e.g., a copier, a printer, a scanner, or a facsimile machine.

The program executed by the image forming apparatus 100, the image processing device 120, and the inspection apparatus 500 according to one or more embodiments may be stored in a computer- readable recording medium, such as a compact disc read-only memory (CD-ROM), a flexible disk (FD), a compact disc-recordable (CD-R), and a digital versatile disk (DVD), in an installable or executable file format, to be provided.

The program executed by the image forming apparatus 100 or the image processing device 120 may be stored on a computer connected to a network, such as the Internet, and provided by allowing the programs to be downloaded through the network. The program executed by the image forming apparatus 100 or the image processing device 120 may be provided or distributed through a network, such as the Internet.

Alternatively, various kinds of programs may be integrated in advance, for example, into a ROM inside the device for distribution.

The program to be executed by the devices according to each of the embodiments described above has a module configuration including the functional components described above. As actual hardware, a CPU (or processor) reads the program from a storage medium and executes the program such that the components described above are loaded onto a main storage device and implemented on the main storage device.

Each of the functions of the described embodiments can be implemented by one or more processing circuits or circuitry. Processing circuitry includes a programmed processor, as a processor includes circuitry. A processing circuit also includes devices such as an application-specific integrated circuit (ASIC), a digital signal processor (DSP), a field-programmable gate array (FPGA), a system on a chip (SOC), a graphics processing unit (GPU), and conventional circuit components arranged to perform the recited functions.

Although some embodiments of the present disclosure have been described above, the above-described embodiments are presented as examples and are not intended to limit the scope of the present disclosure. The new embodiments may be implemented in a variety of other forms; furthermore, various combinations, omissions, substitutions, and changes in the forms may be made without departing from the gist and scope of the disclosure. In addition, the embodiments and modifications or variations thereof are included in the scope and the gist of the invention, and are included in the invention described in the claims and the equivalent scopes thereof. Further, elements according to varying embodiments or modifications may be combined as appropriate.

The aspects of the present disclosure are as follows.

### Aspect 1

An image processing device (120) includes: a processor (208) that controls a scanner to capture image data of a detection object overlapping a background member (92); and sequentially selects a target pixel one by one from multiple pixels of the image data. The processor (208) includes an edge amount calculation unit (310) that calculates an edge amount for the target pixel selected (S101), the edge amount indicating a change in pixel value between the target pixel selected and peripheral pixels adjacent to and surrounding the target pixel selected, in a shadow region (402) in the image data, between: an object region (401) corresponding to the detection object; and a background region (400) corresponding to the background member (92); an edge determination unit (320) that determines whether the target pixel selected corresponds to an edge of the detection object, based on the edge amount calculated (S102) calculated by the edge amount calculation unit (310); an edge continuity determination unit (330) that determines whether the edge is a part of a continuous edge, based on the edge amount calculated for the target pixel selected (S 103), in response to a determination that the target pixel corresponds to the edge (YES in S 102); an edge continuity counter (340) that counts an edge continuity number for the target pixel selected, the edge continuity number for the target pixel selected representing a number of target pixels, each corresponding to the edge of the part of the continuous (S 104); and a boundary position detection unit (350). The boundary position detection unit (350) counts the edge continuity number for a previous target pixel selected immediately before the target pixel selected and determines whether the edge continuity number for the previous target pixel is greater than a preset number (S105) in response to a determination that the target pixel selected does not correspond to the edge (NO in S 102); and detects a boundary position between the detection object and the background member, based on the edge amount of each of the target pixels forming the continuous edge up to the previous target pixel (S 106), in response to a determination that the edge continuity number for the previous target pixel is greater than the preset number (YES in S105).

### Aspect 2

In the image processing device (120) according to Aspect 1, the edge amount calculation unit (310) calculates the edge amount for the target pixel selected sequentially one by one from the multiple pixels in multiple directions. The multiple directions include at least two directions orthogonal to each other.

### Aspect 3

The image processing device (120) according to Aspect 1 or 2, further includes a sign determination unit (331) that determines whether a sign of the edge amount of the target pixel selected is the same as a sign of the edge amount of the previous target pixel (S303). The edge continuity determination unit (330) determines that the target pixel selected is the part of the continuous edge, in response to a determination that the sign of the edge amount of the target pixel selected is the same as the sign of the edge amount of the previous target pixel.

### Aspect 4

In the image processing device (120) according to any one of Aspects 1 to 3, the boundary position detection unit (350) further: determines whether the edge continuity number for the previous target pixel forming the part of the continuous edge is greater than preset number (S105), in response to a determination that the edge is not the part of the continuous edge (NO in S103); and detects the boundary position between the detection object and the background member, based on the edge amount of each of the target pixels corresponding to the edge of the part of the continuous edge (S106), in response to a determination that the edge continuity number for the previous target pixel forming the part of the continuous edge is greater than preset number (YES in S105).

### Aspect 5

In the image processing device (120) according to any one of Aspect 1 to 4, the boundary position detection unit (350) detects, as the boundary position, a position of the target pixel having the largest edge amount among the target pixels each corresponding to the edge of the part of the continuous edge.

### Aspect 6

In the image processing device (120) according to any one of Aspects 1 to 5, the edge continuity counter (340) resets the edge continuity number after the determination as to whether the edge continuity number is greater than preset number (N) by the boundary position detection unit (350) (S105).

### Aspect 7

The image processing device (120) according to any one of Aspects 4 to 6, further includes a memory (205) that stores a candidate position and a candidate edge amount of the target pixel having the largest edge amount among the target pixels each corresponding to the edge of the part of the continuous edge, in response to a determination that the edge is the part of the continuous edge (YES in S203) by the edge continuity determination unit (330). The boundary position detection unit (350) further: determines whether the edge continuity number for the previous target pixel is greater than preset number (S208), in response to either: the determination that the target pixel does not correspond to the edge (NO in S202); or the determination that the edge is not the part of the continuous edge (NO in S203); and detects, as the boundary position, the candidate position stored by the memory (205), in response to the determination that the edge continuity number for the previous target pixel is greater than preset number (YES in S208).

### Aspect 8

In the image processing device (120) according to Aspect 7, the edge continuity determination unit (330) further: determines whether a ratio of the edge amount of the target pixel to the candidate edge amount is less than a preset ratio (R) (S304); and determines that the edge is not the part of the continuous edge, in response to a determination that the ratio is less than the preset ratio (R) (YES in S304).

### Aspect 9

In the image processing device (120) according to any one of Aspects 1 to 8, the edge continuity determination unit (330) further: determines whether the edge amount of the target pixel is greater than a preset value (E) (S404); and determines that the edge is not the part of the continuous edge, in response to a determination that the edge amount of the target pixel is greater than the preset value (E).

### Aspect 10

An image processing device (120) includes: a processor (208) that controls a scanner to capture image data of a detection object overlapping a background member (92); and selects a target pixel from multiple pixels of the image data. The processor (208) includes a boundary position detection unit (350) that extracts a continuous edge segment in which pixels are consecutive, each of the target pixels having a change in pixel value being greater than a predetermined threshold and the number of the target pixels exceeding a preset number (N), the change in pixel value being between: the target pixel selected and peripheral pixels adjacent to and surrounding the target pixel selected, in a shadow region (402) in the image data, between an object region (401) corresponding to the detection object and a background region (400) corresponding to the background member (92); and detects boundary positions between the detection object and the background member, based on the change in pixel value of each of the target pixels within the continuous edge segment; a tilt detection unit that detects a tilt of the detection object based on the multiple boundary positions; and a correction unit that corrects a tilt of the detection object included in the image data, based on the detected tilt.

### Aspect 11

An image forming apparatus (100) includes the image processing device (120) according to any one of Aspect 1 to 10; and an image former (140) to form an image based on the image data processed by the image processing device (120).

### Aspect 12

An image processing method includes controlling a scanner to capture image data of a detection object overlapping a background member (92); sequentially selecting a target pixel one by one from multiple pixels of the image data; calculating an edge amount for the target pixel selected (S101), the edge amount indicating a change in pixel value between the target pixel selected and peripheral pixels adjacent to and surrounding the target pixel selected, in a shadow region (402) in the image data, between an object region (401) corresponding to the detection object and a background region (400) corresponding to the background member (92); determining whether the target pixel selected corresponds to an edge, based on the edge amount calculated (S102); determining whether the edge is a part of a continuous edge, based on the edge amount calculated for the target pixel selected (S103), in response to a determination that the target pixel corresponds to the edge (YES in S102); counting an edge continuity number for the target pixel selected, the edge continuity number for the target pixel selected representing a number of target pixels, each corresponding to the edge of the part of the continuous edge (S104); counting an edge continuity number for a previous target pixel selected immediately before the target pixel selected and determine whether the edge continuity number for the previous target pixel is greater than a preset number (S105) in response to a determination that the target pixel selected does not correspond to the edge (NO in S102); and detecting a boundary position between the detection object and the background member, based on the edge amount of each of the target pixels forming the continuous edge up to the previous target pixel (S106), in response to a determination that the edge continuity number for the previous target pixel is greater than the preset number (YES in S105).

### Aspect 13

A carrier means carrying computer readable code for controlling a computer system to carry out the method according to Aspect 12.

### Aspect 14

The image processing device according to any one of claims 1 to 9, further includes a derivative filter that applies weight coefficients of the derivative filter to pixel values of the target pixel and the peripheral pixels to obtain a differential amount; and calculates the edge amount based on the differential amount.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An image processing device (120) comprising a processor (208) that:
controls a scanner to capture image data of a detection object overlapping a background member (92); and
sequentially selects a target pixel one by one from multiple pixels of the image data, the processor (208) including:
an edge amount calculation unit (310) that calculates an edge amount for the target pixel selected (S101), the edge amount indicating a change in pixel value between the target pixel selected and peripheral pixels adjacent to and surrounding the target pixel selected, in a shadow region (402) in the image data, between:
an object region (401) corresponding to the detection object; and
a background region (400) corresponding to the background member (92);
an edge determination unit (320) that determines whether the target pixel selected corresponds to an edge of the detection object, based on the edge amount calculated (S102) calculated by the edge amount calculation unit (310);
an edge continuity determination unit (330) that determines whether the edge is a part of a continuous edge, based on the edge amount calculated for the target pixel selected (S103), in response to a determination that the target pixel corresponds to the edge (YES in S102);
an edge continuity counter (340) that counts an edge continuity number for the target pixel selected, the edge continuity number for the target pixel selected representing a number of target pixels, each corresponding to the edge of the part of the continuous (S104); and
a boundary position detection unit (350) that:
counts the edge continuity number for a previous target pixel selected immediately before the target pixel selected and determines whether the edge continuity number for the previous target pixel is greater than a preset number (S105) in response to a determination that the target pixel selected does not correspond to the edge (NO in S102); and
detects a boundary position between the detection object and the background member, based on the edge amount of each of the target pixels forming the continuous edge up to the previous target pixel (S106), in response to a determination that the edge continuity number for the previous target pixel is greater than the preset number (YES in S105).

2. The image processing device (120) according to claim 1,
wherein the edge amount calculation unit (310) calculates the edge amount for the target pixel selected sequentially one by one from the multiple pixels in multiple directions, and
the multiple directions include at least two directions orthogonal to each other.

3. The image processing device (120) according to claim 1 or 2, further comprising a sign determination unit (331) that determines whether a sign of the edge amount of the target pixel selected is the same as a sign of the edge amount of the previous target pixel (S303),
wherein the edge continuity determination unit (330) determines that the target pixel selected is the part of the continuous edge, in response to a determination that the sign of the edge amount of the target pixel selected is the same as the sign of the edge amount of the previous target pixel.

4. The image processing device (120) according to any one of claims 1 to 3,
wherein the boundary position detection unit (350) further:
determines whether the edge continuity number for the previous target pixel forming the part of the continuous edge is greater than preset number (S105), in response to a determination that the edge is not the part of the continuous edge (NO in S103); and
detects the boundary position between the detection object and the background member, based on the edge amount of each of the target pixels corresponding to the edge of the part of the continuous edge (S106), in response to a determination that the edge continuity number for the previous target pixel forming the part of the continuous edge is greater than preset number (YES in S105).

5. The image processing device (120) according to any one of claims 1 to 4,
wherein the boundary position detection unit (350) detects, as the boundary position, a position of the target pixel having the largest edge amount among the target pixels each corresponding to the edge of the part of the continuous edge.

6. The image processing device (120) according to any one of claims 1 to 5,
wherein the edge continuity counter (340) resets the edge continuity number after the determination as to whether the edge continuity number is greater than a preset number (N) by the boundary position detection unit (350) (S105).

7. The image processing device (120) according to any one of claims 4 to 6, further comprising a memory (205) that stores a candidate position and a candidate edge amount of the target pixel having the largest edge amount among the target pixels each corresponding to the edge of the part of the continuous edge, in response to a determination that the edge is the part of the continuous edge (YES in S203) by the edge continuity determination unit (330),
wherein the boundary position detection unit (350) further:
determines whether the edge continuity number for the previous target pixel is greater than preset number (S208), in response to either:
the determination that the target pixel does not correspond to the edge (NO in S202); or
the determination that the edge is not the part of the continuous edge (NO in S203); and
detects, as the boundary position, the candidate position stored by the memory (205), in response to the determination that the edge continuity number for the previous target pixel is greater than preset number (YES in S208).

8. The image processing device (120) according to claim 7,
wherein the edge continuity determination unit (330) further:
determines whether a ratio of the edge amount of the target pixel to the candidate edge amount is less than a prescribed ratio (R) (S304); and
determines that the edge is not the part of the continuous edge, in response to a determination that the ratio is less than the preset ratio (R) (YES in S304).

9. The image processing device (120) according to any one of claims 1 to 8,
wherein the edge continuity determination unit (330) further:
determines whether the edge amount of the target pixel is greater than a preset value (E) (S404); and
determines that the edge is not the part of the continuous edge, in response to a determination that the edge amount of the target pixel is greater than the preset value (E).

10. An image forming apparatus (100) comprising:
the image processing device (120) according to any one of claims 1 to 10; and
an image former (140) to form an image based on the image data processed by the image processing device (120).

11. An image processing method comprising:
controlling a scanner to capture image data of a detection object overlapping a background member (92);
sequentially selecting a target pixel one by one from multiple pixels of the image data;
calculating an edge amount for the target pixel selected (S101), the edge amount indicating a change in pixel value between the target pixel selected and peripheral pixels adjacent to and surrounding the target pixel selected, in a shadow region (402) in the image data, between:
an object region (401) corresponding to the detection object; and
a background region (400) corresponding to the background member (92);
determining whether the target pixel selected corresponds to an edge, based on the edge amount calculated (S102);
determining whether the edge is a part of a continuous edge, based on the edge amount calculated for the target pixel selected (S103), in response to a determination that the target pixel corresponds to the edge (YES in S102);
counting an edge continuity number for the target pixel selected, the edge continuity number for the target pixel selected representing a number of target pixels, each corresponding to the edge of the part of the continuous edge (S104);
counting an edge continuity number for a previous target pixel selected immediately before the target pixel selected and determine whether the edge continuity number for the previous target pixel is greater than a preset number (S105) in response to a determination that the target pixel selected does not correspond to the edge (NO in S102); and
detecting a boundary position between the detection object and the background member, based on the edge amount of each of the target pixels forming the continuous edge up to the previous target pixel (S106), in response to a determination that the edge continuity number for the previous target pixel is greater than the preset number (YES in S105).

12. A carrier means carrying computer readable code for controlling a computer system to carry out the method according to claim 12.

13. The image processing device according to any one of claims 1 to 9, further comprising a derivative filter that:
applies weight coefficients of the derivative filter to pixel values of the target pixel and the peripheral pixels to obtain a differential amount; and
calculates the edge amount based on the differential amount.
